(19) 

Europäisches Patentamt
European Patent Office
Office européen des brevets

(11) **EP 4 228 340 B1**

(12) **EUROPEAN PATENT SPECIFICATION**

(45) Date of publication and mention
of the grant of the patent:
**10.06.2026 Bulletin 2026/24**

(21) Application number: **21877996.5**

(22) Date of filing: **06.10.2021**

(51) International Patent Classification (IPC):
*H04W 52/14* (2009.01)    *H04W 52/24* (2009.01)
*H04W 24/10* (2009.01)    *H04L 5/00* (2006.01)
*H04B 7/0417* (2017.01)    *H04W 84/04* (2009.01)

(52) Cooperative Patent Classification (CPC):
**H04L 5/005; H04B 7/0626; H04L 5/0053;**
**H04L 5/0094; H04W 52/241; H04W 52/325;**
H04W 52/143; H04W 52/38

(86) International application number:
**PCT/KR2021/013705**

(87) International publication number:
**WO 2022/075745 (14.04.2022 Gazette 2022/15)**

(54) **POWER CONTROL METHOD AND DEVICE**

LEISTUNGSSTEUERUNGSVERFAHREN UND -VORRICHTUNG

PROCÉDÉ ET DISPOSITIF COMMANDE DE PUISSANCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.10.2020 KR 20200128895**
**13.01.2021 KR 20210004651**

(43) Date of publication of application:
**16.08.2023 Bulletin 2023/33**

(73) Proprietor: **LG Electronics Inc.**
**Seoul 07336 (KR)**

(72) Inventors:
• **SHIM, Jaenam**
**Seoul 06772 (KR)**
• **KO, Hyunsoo**
**Seoul 06772 (KR)**
• **YOU, Hyangsun**
**Seoul 06772 (KR)**
• **PARK, Haewook**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
**WO-A1-2012/177207    WO-A1-2020/005004**
**WO-A1-2020/093361    KR-A- 20200 071 114**
**US-A1- 2019 207 705    US-A1- 2020 053 655**
**US-A1- 2020 305 090**

• **"3rd Generation Partnership Project; Technical**
**Specification Group Radio Access Network; NR;**
**Radio Resource Control (RRC) protocol**
**specification (Release 16)", vol. RAN WG2, no.**
**V16.0.0, 6 April 2020 (2020-04-06), pages 1 - 835,**
**XP051893854, Retrieved from the Internet**
**<URL:ftp://ftp.3gpp.org/Specs/archive/**
**38_series/38.331/38331-g00.zip 38331-g00.docx>**
**[retrieved on 20200406]**

**Description**

**TECHNICAL FIELD**

The present disclosure relates to wireless communication.

**BACKGROUND ART**

One potential technology aimed at enabling future cellular network deployment scenarios and applications is support for wireless backhaul and relay links. This enables flexible and highly dense deployment of NR cells without the need to proportionally densify the transport network.

It is expected that greater bandwidth in NR compared to LTE with the native deployment of massive MIMO or multi-beam systems will be available. Thus (e.g., mmWave spectrum) creates opportunities for the development and deployment of integrated access and backhaul links. This makes it easier for a deployment of a dense network of self-backhauled NR cells in a more integrated manner by establishing multiple control and data channels/procedures defined to provide access or access to the terminals. Such systems are referred to as integrated access and backhaul links (IAB).

A simultaneous operation of an IAB node MT and IAB node DU is considered in a next-generation IAB system by considering a non-TDM environment. The TDM environment means that the MT and DU in the IAB node operate in a time division manner, and the non-TDM environment means all other environments. Accordingly, the IAB node may support four cases as follows.

(Operational case 1) DU-transmission, MT-transmission
(Operations case 2) DU-transmission, MT-reception
(Operational case 3) DU-reception, MT-transmission
(Operational case 4) DU-reception, MT-reception

The IAB node may be a multi-panel which is well isolated according to an implementation, or may be a multi-panel of which isolation capability is not perfect or a single panel. Since the implementation of the IAB node considers all cases, the multi-panel which is well isolated has no problem in supporting of all of the aforementioned cases, but has the following problems in the other cases.

In the case 1, since the DU and MT of the IAB node support simultaneous transmission, in the presence of power sharing capability, there may be a problem such as power shortage, transmission collision, or the like of the MT and DU of the IAB node. In addition, when a transmit power level is significantly different between the MT and DU of the IAB node, a signal transmitted with high power may cause interference to a signal transmitted with low power.

In the cases 2 and 3, since the transmit power level is different, a signal of an MT or DU of a transmitting IAB node causes interference to a DU or MT of a receiving IAB node, which may result in deterioration of reception sensitivity. In this case, a cross link interference (CLI) problem may occur. Since the existing CU supports UE to UE, a CLI considering a wider range than this is required.

In the case 4, there is no problem in reception when a power level of a signal received by the MT and DU of the IAB node is within a specific range. However, when a power level different is significant, there may be difficulty in decoding two different signals due to automatic gain control (AGC) or the like.

For all problematic cases, the most fundamental solution may be power control. The MT of the IAB node supports a function of a UE and thus is capable of performing power control, but it may not be applicable to the DU of the IAB node. Accordingly, when only the power control of the IAB node MT is performed, the problems may be solved to some extent. However, in this case, the IAB node DU does not perform the power control, which may eventually result in the same effect as a case where the IAB node DU has priority. Therefore, reception sensitivity may deteriorate for the cases 2 and 4. A link between IAB nodes is a backhaul link, and thus may be a bottleneck of backhaul link performance.

Accordingly, power control of the IAB node DU may be required to ensure performance of a backhaul link. However, since direct downlink power control is not considered in a standard or the like, the present specification proposes downlink power control based on a request of a UE/IAB node MT. Although the power control of the IAB node DU based on the request of the IAB node MT is described in the present specification, it is also applicable by replacing the IAB node MT to a UE/terminal, and the IAB node DU with a Gnb/base station. In addition, although a single panel/single RF IAB node is described in the present specification, the present specification is also applicable to single panel/multi-RF, multi-panel/single RF, and multi-panel/multi-RF environments.

WO 2020/093361 A1 discloses methods and apparatuses for power control, wherein the method comprises: receiving a first signaling indicating one or multiple power values for a downlink reception from a node, each power value being associated with a spatial domain filter, and determining a power value for the downlink reception from the node.

WO 2012/177207 A1 discloses A UE and a method therein for transmission power control of uplink transmissions. The method comprises receiving (810), through signalling a configuration indicating at least one reference signal, RS, and a reference transmission power level for each indicated RS.

3rd Generation Partnership Project; Technical Specification Group Radio Access Network; NR; Radio Resource Control (RRC) protocol specification (Release 16), vol. RAN WG2, no. V16.0.0 6 April 2020 (2020-04-06)", specifies the Radio Resource Control protocol for the radio interface between UE and NG-RAN, and further specifies: - the radio related information transported in a transparent container between source gNB and target gNB upon inter gNB handover; - the radio related information transported in a transparent container between a source or target gNB and another system upon inter RAT handover. - the radio related information transported in a transparent container between a source eNB and target gNB during E-UTRA-NR Dual Connectivity.

## DISCLOSURE

### TECHNICAL SOLUTION

The present specification proposes a method and apparatus for power control, and more particularly, downlink power control based on a request of a terminal and/or an IAB node MT. The invention is defined by the independent claims. Dependent claims describe embodiments thereof.

### ADVANTAGEOUS EFFECTS

The present specification newly proposes a downlink power control method. Therefore, it is possible to solve a problem of reception quality deterioration of an IAB node and/or terminal performing a full-duplex operation. In addition, in case of the IAB node, it is possible to avoid a decrease in cell coverage depending on a self-interference cancellation (SIC) performance limitation.

Effects that can be obtained through a specific example of the present specification are not limited to the aforementioned effects. For example, there may be various technical effects that can be understood or derived by a person having ordinary skill in the related art from the present specification. Accordingly, specific effects of the present specification are not limited to those explicitly described in the present specification, and may include various effects that can be understood or derived from technical features of the present specification.

### BRIEF DESCRIPTION OF THE DRAWINGS

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 1 shows a wireless communication system to which the present disclosure can be applied.
FIG. 2 is a diagram showing a wireless protocol architecture for a user plane.
FIG. 3 is a diagram showing a wireless protocol architecture for a control plane.
FIG. 4 shows another example of a wireless communication system to which the technical features of the present disclosure can be applied.
FIG. 5 illustrates a functional division between an NG-RAN and a 5GC.
FIG. 6 illustrates an example of a frame structure that may be applied in NR.
FIG. 7 schematically illustrates an example for a network with integrated access and backhaul links (IAB).
FIG. 8 shows an example of an operation of an IAB system in a standalone (SA) mode and a non-standalone (NSA) mode.
FIG. 9 schematically illustrates an example of a configuration of access and backhaul links.
FIG. 10 explains links and relationships between IAB nodes.
FIG. 11 is a flowchart for an example of a power control method of a first communication device according to some implementations of the present specification.
FIG. 12 is a flowchart for an example of a method in which a first communication device performs power control for a second communication device according to some implementations of the present specification.
FIG. 13 shows a communication system (1), in accordance with an embodiment of the present disclosure.
FIG. 14 shows wireless devices, in accordance with an embodiment of the present disclosure.
FIG. 15 shows a signal process circuit for a transmission signal, in accordance with an embodiment of the present disclosure.
FIG. 16 shows another example of a wireless device, in accordance with an embodiment of the present disclosure.

FIG. 17 shows a hand-held device, in accordance with an embodiment of the present disclosure.

FIG. 18 shows a vehicle or an autonomous vehicle, in accordance with an embodiment of the present disclosure.

FIG. 19 shows a vehicle, in accordance with an embodiment of the present disclosure.

FIG. 20 shows an XR device, in accordance with an embodiment of the present disclosure.

FIG. 21 shows a robot, in accordance with an embodiment of the present disclosure.

FIG. 22 shows an AI device, in accordance with an embodiment of the present disclosure.

**DETAILED DESCRIPTION**

As used herein, "A or B" may mean "only A", "only B", or "both A and B". That is, "A or B" may be interpreted as "A and/or B" herein. For example, "A, B or C" may mean "only A", "only B", "only C", or "any combination of A, B, and C".

As used herein, a slash (/) or a comma (,) may mean "and/or". For example, "A/B" may mean "A and/or B". Therefore, "A/B" may include "only A", "only B", or "both A and B". For example, "A, B, C" may mean "A, B, or C".

As used herein, "at least one of A and B" may mean "only A", "only B", or "both A and B". Further, as used herein, "at least one of A or B" or "at least one of A and/or B" may be interpreted equally as "at least one of A and B".

As used herein, "at least one of A, B, and C" may mean "only A", "only B", "only C", or "any combination of A, B, and C". Further, "at least one of A, B, or C" or "at least one of A, B, and/or C" may mean "at least one of A, B, and C".

As used herein, parentheses may mean "for example". For instance, the expression "control information (PDCCH)" may mean that a PDCCH is proposed as an example of control information. That is, control information is not limited to a PDCCH, but a PDCCH is proposed as an example of control information. Further, the expression "control information (i.e., a PDCCH)" may also mean that a PDCCH is proposed as an example of control information.

Technical features individually described within a drawing in the present disclosure may be implemented individually or may be implemented simultaneously.

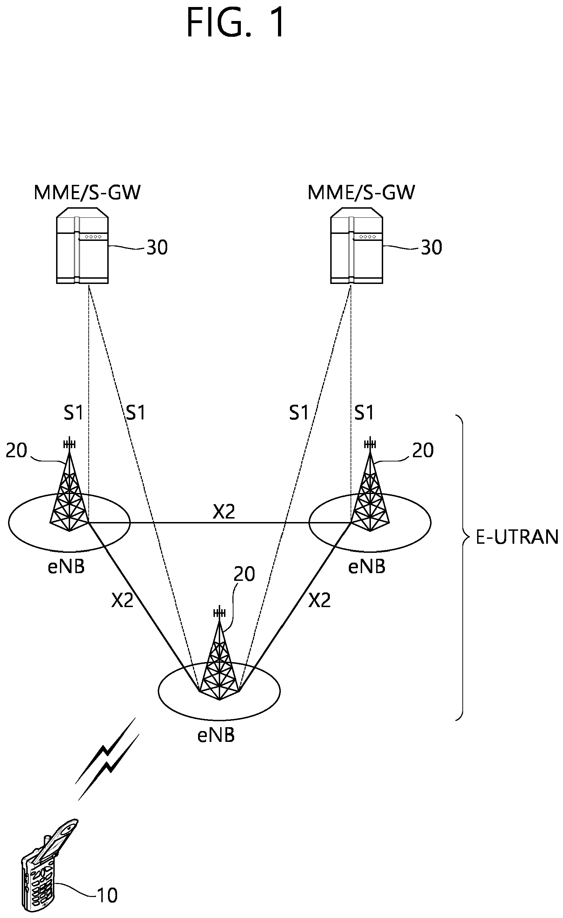

FIG. 1 shows a wireless communication system to which the present disclosure may be applied. The wireless communication system may be referred to as an Evolved-UMTS Terrestrial Radio Access Network (E-UTRAN) or a Long Term Evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

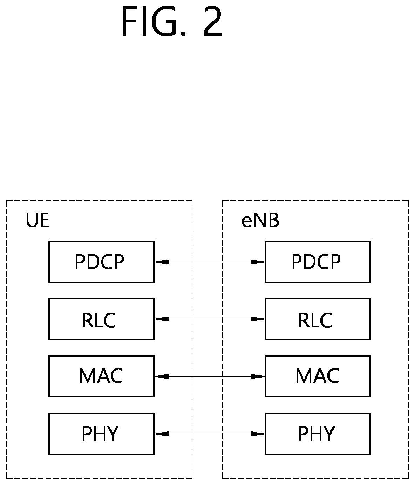

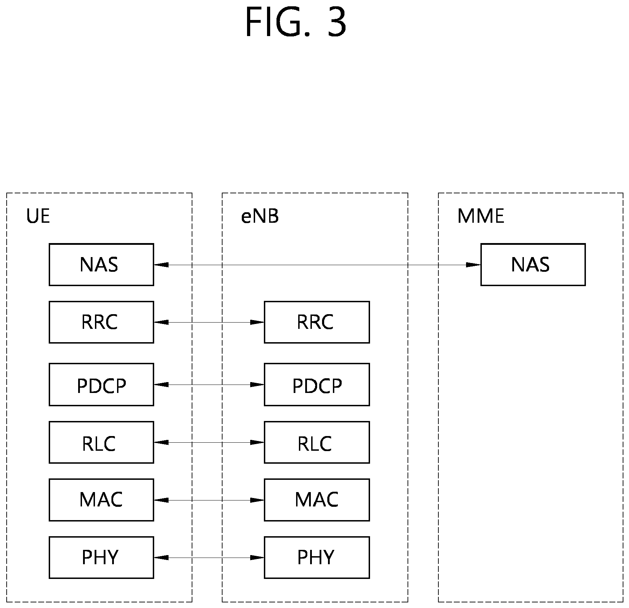

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission, e.g., a subframe or a slot.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

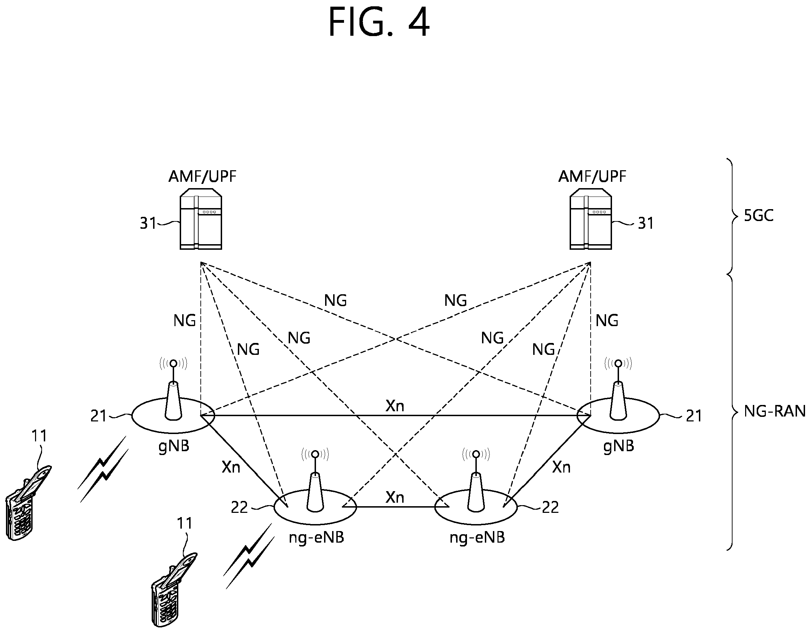

FIG. 4 shows another wireless communication system to which the present disclosure may be applied.

Specifically, FIG. 4 shows a system architecture based on a 5G new radio access technology (NR) system. An entity used in the 5G NR system (hereinafter, simply referred to as "NR") may absorb some or all functions of the entity (e.g., eNB, MME, S-GW) introduced in FIG. 1 (e.g., eNB, MME, S-GW). The entity used in the NR system may be identified in the name of "NG" to distinguish it from LTE.

Referring to FIG. 4, a wireless communication system includes one or more UEs 11, a next-generation RAN (NG-RAN), and a 5th generation core network (5GC). The NG-RAN consists of at least one NG-RAN node. The NG-RAN node is an entity corresponding to the BS 20 of FIG. 1. The NG-RAN node consists of at least one gNB 21 and/or at least one ng-eNB 22. The gNB 21 provides NR user plane and control plane protocol terminations towards the UE 11. The Ng-eNB 22 provides an E-UTRA user plane and a control plane protocol termination towards the UE 11.

The 5GC includes an access and mobility management function (AMF), a user plane function (UPF), and a session management function (SMF). The AMF hosts functions, such as non-access stratum (NAS) security, idle state mobility processing, and so on. The AMF is an entity including the conventional MMF function. The UPF hosts functions, such as mobility anchoring, protocol data unit (PDU) processing, and so on. The UPF is an entity including the conventional S-GW function. The SMF hosts functions, such as UE Internet Protocol (IP) address allocation, PDU session control, and so on.

The gNB and the ng-eNB are interconnected through an Xn interface. The gNB and the ng-eNB are also connected to the 5GC through an NG interface. More specifically, the gNB and the ng-eNB are connected to the AMF through an NG-C interface, and are connected to the UPF through an NG-U interface.

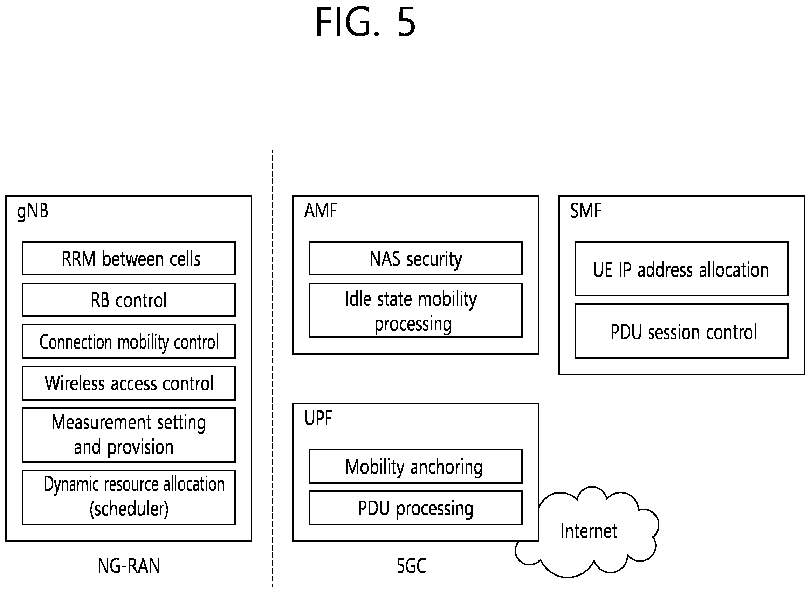

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

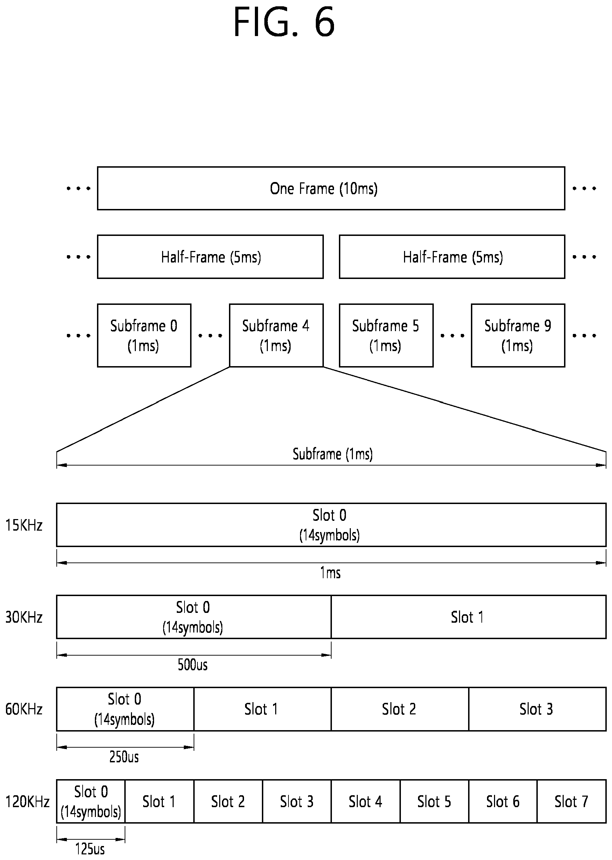

FIG. 6 illustrates an example of a frame structure that may be applied in NR.

Referring to FIG. 6, a frame may be composed of 10 milliseconds (ms) and include 10 subframes each composed of 1 ms.

In the NR, uplink and downlink transmissions may be configured on a frame basis. A radio frame has a length of 10ms, and may be defined as two 5ms half-frames (HFs). The HF may be defined as five 1ms sub-frames (SFs). The SF is divided into one or more slots, and the number of slots in the SF depends on a subcarrier spacing (SCS). Each slot includes 12 or 14 OFDM(A) symbols according to a cyclic prefix (CP). When a normal CP is used, each slot includes 14 symbols. When an extended CP is used, each slot includes 12 symbols. Herein, the symbol may include an OFDM symbol (or CP-OFDM symbol) and an SC-FDMA symbol (or DFT-S-OFDM symbol).

One or a plurality of slots may be included in a subframe according to subcarrier spacings.

The following table 1 illustrates a subcarrier spacing configuration $\mu$.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below illustrates that the number of symbols per slot, the number of slots per frame, and the number of slots per subframe vary depending on the SCS, in case of using an extended CP.

[Table 3]

| SCS($15*2^{\mu}$) | $N^{slot}_{symb}$ | $N^{frame,u}_{slot}$ | $N^{subframe,u}_{slot}$ |
|---|---|---|---|
| 60KHz ($\mu$ =2) | 12 | 40 | 4 |

NR supports multiple numbers (or subcarrier spacing (SCS)) to support various 5G services. For example, when the SCS is 15kHz, a wide region in the legacy cellular band is supported; and when the SCS is 30kHz/60kHz, dense urban areas, low time delay and wide carrier bandwidth are supported; and when the SCS is 60kHz or more, a bandwidth of more than 24.25GHz is supported in order to overcome phase noise.

The NR frequency band may be defined as two types of frequency ranges (FR1 and FR2). A numerical value of the frequency range may be changed and, for example, the two types of frequency ranges (FR1 and FR2) may be as shown in Table 4 below. For convenience of explanation, among the frequency ranges used in the NR system, FR1 may refer to "sub 6GHz range" and FR2 may refer to "above 6GHz range" and may be called millimeter wave (mmW).

[Table 4]

| Frequency Range designation | Corresponding frequency range | Subcarrier Spacing |
|---|---|---|
| FR1 | 450MHz-6000MHz | 15, 30, 60kHz |
| FR2 | 24250MHz-52600MHz | 60, 120, 240kHz |

As described above, the numerical value of the frequency range of the NR system may be changed. For example, FR1 may include a band of 410 MHz to 7125 MHz as shown in Table 5 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for various purposes, for example, for communication for a vehicle (e.g., autonomous driving).

[Table 5]

| Frequency Range designation | Corresponding frequency range | Subcarrier Spacing |
|---|---|---|
| FR1 | 410MHz-7125MHz | 15, 30, 60kHz |
| FR2 | 24250MHz-52600MHz | 60, 120, 240kHz |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

Hereinafter, an integrated access and backhaul link (IAB) will be described. Meanwhile, hereinafter, for convenience of description, a proposed method will be described based on a new RAT (NR) system. However, the range of the system to which the proposed method is applied is expandable to other systems such as 3GPP LTE/LTE-A systems in addition to the NR system.

One potential technology aimed at enabling future cellular network deployment scenarios and applications is support for wireless backhaul and relay links. This enables flexible and highly dense deployment of NR cells without the need to proportionally densify the transport network.

It is expected that greater bandwidth in NR compared to LTE with the native deployment of massive MIMO or multi-beam systems will be available. Thus (e.g., mmWave spectrum) creates opportunities for the development and deployment of integrated access and backhaul links. This makes it easier for a deployment of a dense network of self-backhauled NR cells in a more integrated manner by establishing multiple control and data channels/procedures defined to provide access or access to terminals. Such systems are referred to as integrated access and backhaul links (IAB).

The following terms may be used in the present disclosure.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

In addition, in the present disclosure, for convenience of explanation, when relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

The following drawings were created to explain a specific example of the present specification. Since the names of specific devices described in the drawings or the names of specific signals/messages/fields are presented by way of example, the technical features of the present specification are not limited to the specific names used in the following drawings.

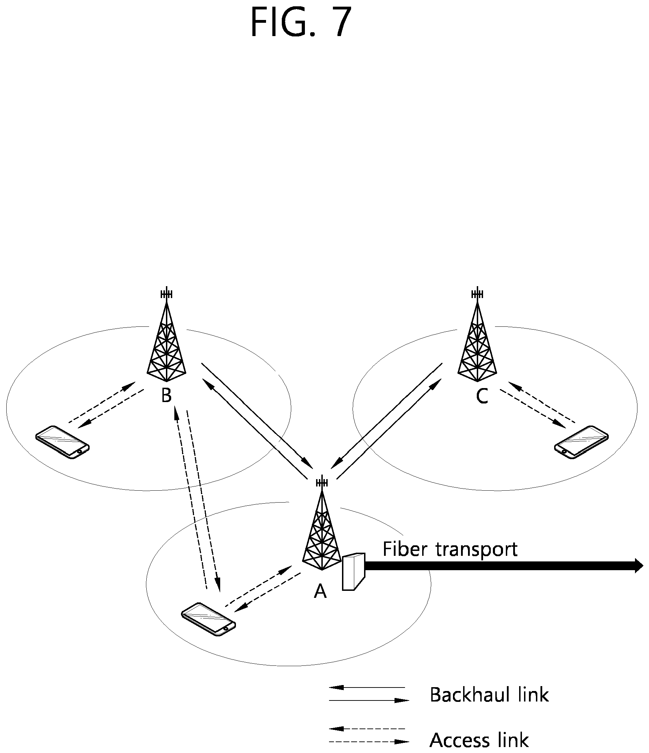

FIG. 7 schematically illustrates an example for a network with integrated access and backhaul links (IAB).

According to FIG. 7, relay nodes (rTRPs) may multiplex access and backhaul links in the time, frequency, or space domain (i.e., beam-based operation).

The operation of different links may operate on the same frequency or on different frequencies (which may also be referred to as 'in-band' or 'out-band' relays, respectively). Although efficient support of out-of-band relays is important for some NR deployment scenarios, it is very important to understand the requirements of in-band operation, which implies tight interworking with access links operating on the same frequency to accommodate duplex restrictions and avoid/mitigate interference.

Furthermore, operating an NR system in the millimeter wave spectrum have some unique challenges. It involves experiencing severe short-term blocking that cannot be easily mitigated by the current RRC-based handover mechanism due to the larger time scale required for completion of the procedure compared to short blocking. Overcoming short blocking in mmWave systems may require a fast RAN-based mechanism for switching between rTRPs that does not necessarily require the inclusion of a core network. The aforementioned need for mitigation of short blocking for NR operation in the millimeter wave spectrum, along with the need for easier deployment of self-backhauled NR cells, creates a need for the development of an integrated framework that allows for fast switching of access and backhaul links. Over-the-air (OTA) coordination between rTRPs may also be considered to mitigate interference and support end-to-end path selection and optimization.

The following requirements and aspects shall be addressed by the IAB for NR:

- Efficient and flexible operation for in-band and out-of-band relaying in indoor and outdoor scenarios
- Multi-hop and redundant connections
- End-to-end path selection and optimization
- Support of backhaul links with high spectral efficiency
- Support of legacy NR UEs

Legacy NR is designed to support half-duplex devices. As such, half-duplex may be supported and worthy of being targeted in an IAB scenario. Furthermore, IAB devices having a full duplex may also be considered.

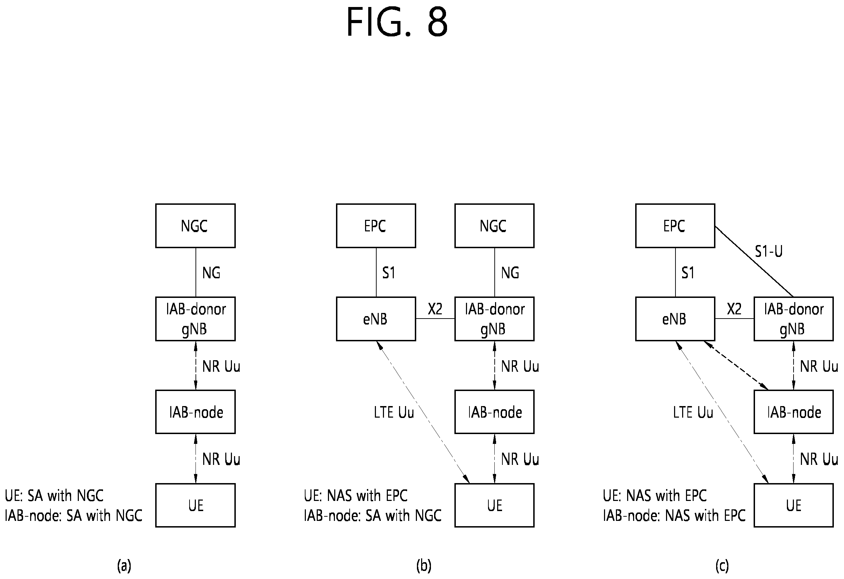

FIG. 8 shows an example of the operation of the IAB system in a standalone (SA) mode and a non-standalone (NSA) mode. Specifically, (a) of FIG. 8 shows an example of the operation of the UE and IAB node considering NGC in SA mode, (b) of FIG. 8 shows an example of the operation of the IAB node considering NGC in SA mode and the UE considering EPC in NSA mode, (c) of FIG. 8 shows an example of the operation of the UE and IAB node considering EPC in the NSA mode.

The IAB node may operate in SA mode or NSA mode. When operating in NSA mode, the IAB node uses only the NR link for backhauling. A UE connected to the IAB node may select an operation mode different from that of the IAB node. The UE may further connect to a different type of core network than the connected IAB node. In this case, (e) DECOR ((enhanced) dedicated core network) or slicing may be used for CN selection. An IAB node operating in NSA mode may be connected to the same or different eNB(s). UEs operating in the NSA mode may be connected to the same or different eNB from the IAB node to which they are connected. FIG. 8 shows an example in consideration of NGC in SA mode and an example in consideration of EPC in NSA mode.

In the IAB scenario, if each relay node (RN) does not have the scheduling capability, the donor gNB (DgNB) shall schedule the entire links between the DgNB, related relay nodes and UEs. In other words, the DgNB should make a scheduling decision for all links by collecting traffic information from all related relay nodes, and then inform each relay node of the scheduling information.

On the other hand, distributed scheduling can be performed when each relay node has a scheduling capability. Then, immediate scheduling of the uplink scheduling request of the UE is possible, and the backhaul/access link can be used more flexibly by reflecting the surrounding traffic conditions.

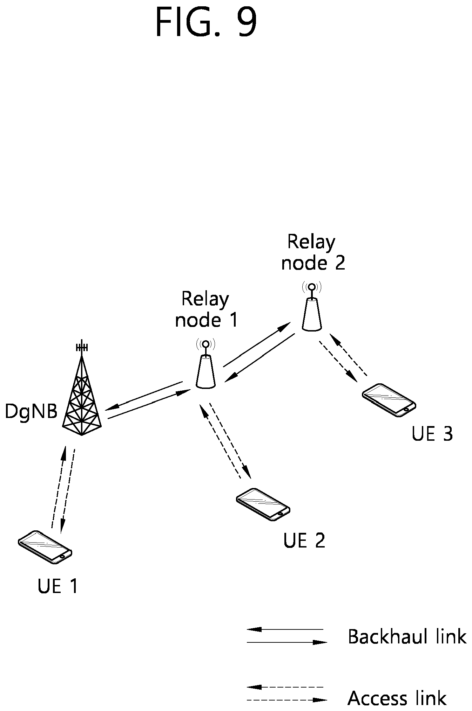

FIG. 9 schematically illustrates an example of a configuration of access and backhaul links.

FIG. 9 shows an example in which a backhaul link and an access link are configured when a DgNB and an IAB relay node (RN) are present. The DgNB and RN1 connect the backhaul link, and RN2 connects the backhaul link to the RN1. The DgNB and UE1 connect the access link, the RN1 and UE2 connect the access link, and the RN2 and UE3 connect the access link.

According to FIG. 9, the DgNB not only receives a scheduling request from the UE 1, but also receives scheduling requests from the UE 2 and UE 3. Then, the DgNB makes a scheduling decision of the two backhaul links and the three access links, and informs the scheduling results. Therefore, such centralized scheduling involves scheduling delays and causes latency problems.

On the other hand, distributed scheduling can be performed if each relay node has scheduling capability. Then, immediate scheduling for the uplink scheduling request of the UE can be performed, and the backhaul/access links can be used more flexibly by reflecting the surrounding traffic situation.

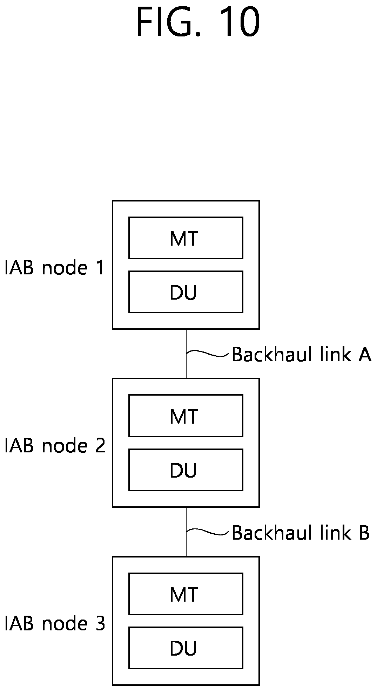

FIG. 10 explains links and relationships between IAB nodes.

Referring to FIG. 10 , IAB node 1 is connected to IAB node 2 through a backhaul link A. For the backhaul link A, the IAB node 1 is the parent node of the IAB node 2, and the IAB node 2 is a child node of the IAB node 1. In addition, the IAB node 2 is connected to the IAB node 3 through a backhaul link B, and the IAB node 2 is a parent node of the IAB node 3 and the IAB node 3 is a child node of the IAB node 2 for the backhaul link B.

Here, each of the IAB nodes may perform two functions. One is Mobile Termination (MT), which maintains a wireless backhaul connection to an upper IAB node or donor node. And, the other is a DU (distributed unit), which provides access connection with UEs or connection with the MT of a lower IAB node.

For example, from the point of view of the IAB node 2, the DU of IAB node 2 is functionally connected to the MT of IAB node 3 on the backhaul link B, and at the same time, the MT of IAB node 2 is functionally connected to the DU of IAB node 1 on the backhaul link A. Here, the child link of the DU of IAB node 2 may mean the backhaul link B between the IAB node 2 and IAB node 3. Also, here, the parent link of the MT of the IAB node 2 may mean the backhaul link A between the IAB node 2 and the IAB node 1.

Hereinafter, methods proposed in the present specification are described.

As described above, since the power control method for downlink is not explicitly defined in the standard or the like, the present specification proposes a downlink power control method. For example, in this method, an IAB node may request a parent IAB node to provide downlink power control, and the parent IAB node may perform the downlink power control, based on the request. Meanwhile, although proposed methods/embodiments described below are described based on the IAB node, it is obvious that the proposed methods/embodiments described below are also applied to a UE, in particular, a UE performing a full-duplex operation.

Power control described below is a method in which an IAB node MT (IAB-MT) requests an IAB node DU (IAB-DU) to provide power control, but the IAB node DU may be able to perform transmission in both an uplink (U) slot and a downlink (D) slot. Therefore, power control may be performed/applied according to a power class of a terminal/UE in the U slot and a power class of a base station/gNB in the D slot.

Hereinafter, a method of configuring a CSI-RS for the purpose of downlink power control is described.

The IAB-DU may configure an identifiable channel state information-reference signal (CSI-RS) resource and/or a CSI-RS resource set to the UE/IAB-MT for the purpose of performing power control by the IAB-MT. Hereinafter, for convenience, the CSI-RS resource and/or the CSI-RS resource set are described as a CSI-RS. That is, as a CSI-RS identifying method described below, the IAB-DU may configure a CSI-RS that can be identified by the IAB-MT for the purpose of power control, and the IAB-MT which has received the CSI-RS may perform one or multiple CSI reports according to a usage among the identified CSI-RSs to request for control on downlink power. In the CSI-RS for this usage, that is, power control, other parameters such as a beam direction or the like may be identical, and only a parameter for power control may be different. A CSI-RS resource index/CSI-RS resource set index may be reported together with CQI or may be reported independently, or only the index may be reported. In the present specification, a report operation may mean a CSI report based on the received CSI-RS.

Hereinafter, a type of the CSI-RS according to the purpose of downlink power control is described.

To allow the IAB-MT to request for power control, the IAB-DU may configure a CSI-RS that can be identified by the IAB-MT. The CSI-RS may be identified in units of a CSI-RS resource or in units of a CSI-RS resource set. The identification in units of the CSI-RS resource or in units of the CSI-RS resource set may be performed implicitly/explicitly, and the following identification methods may be considered.

(Identification method 1) Normal CSI-RS

The normal CSI-RS may mean a CSI-RS which does not contain power control request information. A report on the normal CSI-RS transmitted by the IAB-MT may include only information of channel estimation. That is, the report on the normal CSI-RS may not include information related to power control.

(Identification method 2) CSI-RS for decrease of power control

When the IAB-MT reports the CSI-RS, the IAB-DU may determine that it is requested to decrease power control. The CSI-RS may include only information related to a decrease of transmit power. Alternatively, the report on the CSI-RS may include information on a target decreased transmit power value or information requesting to decrease a specific dB value relatively with respect to current transmit power.

(Identification method 3) CSI-RS for addition of power control

When the IAB-MT reports the CSI-RS, the IAB-DU may determine that it is requested to increase transmit power.

The CSI-RS may include only information related to transmit power boosting/addition. Alternatively, the report on the CSI-RS may include information on a target boosting/added transmit power value or information requesting to increase a specific dB value relatively with respect to current transmit power.

As an example of the present proposal, when the CSI-RS of the aforementioned three difference purposes is configured to the IAB-MT and when the UE reports a channel quality indicator (CQI) for a CSI-RS resource and/or CSI-RS resource set for a decrease in transmit power, it may be interpreted that the IAB-DU which has received the CQI report (not only CQI but also rank indicator (RI), precoding matrix indicator (PMI), reference signal received power (RSRP), or the like may be included in the CSI report) implicitly requests to decrease transmit power. The IAB-MT may be not only the IAB-MT but also a normal UE (e.g., a UE performing a full-duplex operation). The IAB-DU which has received the report may use a method pre-agreed to know which CSI-RS resource and/or CSI-RS resource set are used by the IAB-MT to calculate the CQI and to report this. For example, when a plurality of CSI-RS resources/CS-RS resource sets are indicated, the IAB-MT may report a CSI-RS resource index/CSI-RS resource set index to the IAB-DU.

Since the method is a binary request for a decrease/increase in transmit power, additional signaling may be required for a specific value for the power increase/decrease. Alternatively, according to the power decrease request, the IAB-MT may decrease/increase transmit power by a pre-determined/agreed specific value/level. When a value of increasing/decreasing the transmit power one time is denoted by delta, if the IAB-MT requests the power decrease N times, it may be considered to decrease power by a value of N*delta.

For example, a BS may configure a first resource (or resource set), second resource (or resource set), and third resource (or resource set) for a CSI-RS to a UE. Herein, the first resource may be a resource for a normal CSI-RS, the second resource may be a CSI-RS resource for a decrease in transmit power, and the third resource may be a CSI-RS resource for an increase in transmit power. In this case, when the UE transmits a CSI report for the third resource to the BS, the BS may determine that the CSI report includes information requesting an increase in downlink transmit power. Thereafter, the BS may increase downlink transmit power for the UE, based on the CSI report for the third resource.

In addition, the UE may include information on a specific value in the CSI report transmitted to the BS. The specific value may be a difference value between downlink transmit power used by the BS and target downlink transmit power requested by the UE. Alternatively, the specific value may be a value for the target downlink transmit power.

Alternatively, the UE may not include information on the specific value in the CSI report transmitted to the BS. In this case, the BS which has received the CSI report may change the downlink transmit power by a pre-determined specific value.

When the IAB-MT or terminal/UE does not know a change of a power offset of a CSI-RS configured by the gNB/IAB-DU, the IAB-MT/UE may determine a change in reception channel quality (e.g., an increase or decrease in channel quality) through channel measurement such as RSRP or the like, which may lead to a possibility of misunderstanding in selection of a modulation and coding scheme (MCS). Therefore, when a CSI-RS currently configured is not a normal CSI-RS, that is, when there is a power offset against receive power of a CSI-RS expected by the UE/AB-MT, the IAB_DU or the gNB may indicate the offset value to the UE/IAB-MT. When the CSI-RS is configured in a UE/IAB-MT specific manner, a configuration or the like related to the CSI-RS may be reported in a UE/IAB-MT specific manner, and when it is configured in a cell-specific manner, the gNB/IAB-DU may report the configuration or the like related to the CSI-RS in a cell-specific manner. The CSI-RS may implicitly include information related to power control, or the information may be transmitted through downlink control information (DCI)/medium access control-control element (MAC-CE)/RRC signaling or the like. Alternatively, according to a resource pool or resource set including a resource for transmitting the CSI-RS, the normal CSI-RS and a CSI-RS having a power offset may be identified. Being identified according to the resource pool or the resource set may mean that, from a perspective of an IAB-MT/UE, while performing a CSI-RS, it is possible to determine whether the CSI-RS is a normal CSI-RS or a CSI-RS having a power offset while configuring the CSI-RS.

Meanwhile, when the normal CSI-RS and the CSI-RS having the power offset are not identified by the resource pool or the resource set, the IAB-MT/UE may identify them according to the following method or the like. According to a time-domain operation of the CSI-RS, the CSI-RS may be classified into a periodic CSI-RS, a semi-periodic CSI-RS, and an aperiodic CSI-RS. When a CSI-RS configured or transmitted by the gNB/IAB-DU to the IAB-MT/UE has a power offset, that is, when it is the aforementioned CSI-RS indicating the power offset, the gNB/IAB-DU may report a presence/absence of a power offset of the CSI-RS and a value thereof to the IAB-MT/UE according to each type by using the following method.

(Case 1) Periodic CSI-RS

When the gNB/IAB-DU configures a periodicity and a slot offset for a periodic CSI-RS to the UE/IAB-MT through RRC signaling, a periodicity and slot offset of a CSI-RS having a power offset may be identified and reported. The normal CSI-RS and the CSI-RS having the power offset may be reported by identifying the periodicity and the slot offset, or may be implicitly reported. For example, since the CSI-RS having the power offset may be used not frequently compared to the normal CSI-RS for uplink power control, the UE/IAB-MT may determine a CSI-RS having a relatively longer periodicity as the CSI-RS having the power offset according to a pre-agreement. Alternatively, the UE/IAB-MT may determine this as a CSI-RS having a small or great power offset according to a pre-agreement. Alternatively, instead of identifying the periodicity and the slot offset with respect to the normal CSI-RS and the CSI-RS having the power offset according to the aforementioned method, start and end points of the CSI_RS having the power offset may be indicated to the UE/IAB-MT through DCI, MAC-CE, or RRC signaling while receiving the periodic CSI-RS. That is, the UE/IAB-MT may indicate the periodic CSI-RS of the normal CSI-RS through DCI, MAC-CE, or RRC signaling so that a duration of the CSI-RS having the power offset is indicated at a previous or later time. When the CSI-RS having the power offset is configured, the power offset value may be configured together with the periodicity and the slot offset. Alternatively, the periodicity, the slot offset, or the like may be indicated to the UE through DCI, MAC-CE, RRC, or the like at a later time.

(Case 2) Semi-static CSI-RS

Similarly to the case of the periodic CSI-RS, when the gNB/IAB-DU configures a periodicity and a slot offset to the UE/IAB-MT through RRC signaling, a periodicity and slot offset of a CSI-RS having a power offset may be identified and reported, and when a semi-static CSI-RS is activated/deactivated through MAC-CE, it may be indicated by identifying whether it is a normal CSI-RS or a CSI-RS having a power offset. That is, when the semi-static CSI-RS is configured, a periodicity and a slot offset may be configured for both the normal CSI-RS and the CSI-RS having the power offset. In this case, each periodicity and slot offset may be explicitly identified for the normal CSI-RS and the CSI-RS having the power offset, or may be reported implicitly or according to a pre-agreement. For example, the UE/IAB-MT may determine a CSI-RS having a long periodicity as a normal CSI-RS, and may determine a CSI-having a short periodicity as a CSI-RS having a power offset.

Alternatively, when the gNB/IAB-DU indicates activation/deactivation of the semi-static CSI-RS through MAC-CE, a power offset field of the indicated semi-static CSI-RS may be added and indicated so that the UE/IAB-MT is able to determine whether the semi-static CSI-RS is a normal CSI-RS or a CSI-RS having a power offset. That is, the normal CSI-RS and the CSI-RS having the power offset have the same periodicity and slot offset, and whether it is the normal CSI-RS or the CSI-RS having the power offset may be indicated by containing information indicating this in MAC-CE indicating activation/deactivation. For example, a bit corresponding whether it is a power offset may be added to an activation MAC-CE to determine a normal CSI-RS when the value is 0 and a CSI-RS having a power offset when the value is a specific value other than 0, or the other way around is also possible. Alternatively, a specific number of bits corresponding to a power offset value may be configured to determine that this value is a power offset value. That is, it may be determined as the normal CSI-RS when this value is 0, and may be determined as a CSI-RS having a power offset of n dB/dBm when this value is n. Alternatively, by using 3 states, a first state means a normal CSI-RS, a second state means a CSI-RS of which a power offset value is a negative value, and a third state means a CSI-RS of which a power offset value is a positive value.

When the CSI-RS having the power offset is configured to the UE/IAB-MT, the power offset value may be indicated to the UE together with the periodicity and the slot offset, or the power offset value may be indicated at a later time through RRC/MAC-CE/DCI or the like. Alternatively, the power offset value may not be given, and may be known through an implementation of the UE/IAB-MT.

(Case 3) Aperiodic CSI-RS

When a slot offset is indicated to the UE/IAB-MT through RRC, the gNB/IAB-DU may identify and indicate slot offsets of a CSI-RS having a power offset and a normal CSI-RS to the UE/IAB-MT, and may also identify and indicate DCI for triggering an aperiodic CSI-RS to the UE/IAB-MT. Alternatively, the slot offset may be identified and indicated by using the same DCI, and may be identified according to a pre-agreement with a reception timing, a frequency location, or the like. For example, when a slot offset of the normal CSI-RS is n and a slot offset of a CSI-RS having a power offset is m, where n<m, the UE/IAB-MT may expect that an aperiodic CSI-RS is a normal CSI-RS if DCI for triggering the aperiodic CSI-RS is received before/after a k-th slot, and may determine that the aperiodic CSI-RS is a CSI-RS having a power offset if it is received after/before the k-th slot. Alternatively, the normal CSI-RS and the CSI-RS having the power offset may be used by sharing the same slot offset. For example, DCI for triggering the aperiodic CSI-RS and DCI for triggering the aperiodic CSI-RS having the power offset may be identified and indicted to the UE.

When the UE/IAB-MT is not able to predict a configuration of a corresponding CSI-RS through an aperiodic CSI-RS or the like, it may be reported to the UE/IAB-MT at a previous or later time by using DCI, and when the CSI-RS is configured as a periodic CSI-RS, such a periodicity may be reported at a previous time to the UE/IAB-MT through RRC/MAC-CE.

Hereinafter, a method of identifying a CSI-RS will be described.

The method of identifying the CSI-RS may consider an implicit/explicit method. That is, the CSI-RS may be identified by generating a new field for the purpose of a power control request, and may be identified according to the purpose of power control for a CSI-RS resource or each resource set by using some or all of the following parameters. CSI-RS identification information described below may be transmitted to an IAB-MT in advance through higher layer signaling such as RRC signaling, MAC-CE, or the like.

Hereinafter, an identification method using a power offset will be described.

A power offset may be configured differently according to the aforementioned three types of CSI-RSs so that a receiving IAB-MT is able to identify them. In this case, a criterion of the power offset may use powerControlOffset, powerControlOffsetSS of the existing NZP-CSI-RS-Resource or may be based on a normal CSI-RS. In case of using a power offset based on comparison of a PDSCH resource element (RE) and/or a secondary synchronization signal (SSS), for example, a CSI-RS for requesting to decrease transmit power is configured to have a lower power offset based on comparison of the PDSCH RE and/or the SSS than the normal CSI-RS, and a CSI-RS for requesting to increase transmit power may be configured to have a higher power offset based on comparison with the PDSCH RE and/or the SSS. Alternatively, on the contrary, the CSI-RS for requesting to decrease transmit power may be configured to have a higher power offset based on comparison of the PDSCH RD and/or the SSS than the normal CSI-RS, and a CSI-RS for requesting to increase transmit power may be configured to have a lower poser offset based on comparison of the PDSCH RE and/or the SSS.

In other words, the transmit power of the CSI-RS may be configured differently according to a purpose, that is, whether it is a normal CSI-RS or a CSI-RS for a CSI report for an increase in transmit power or a CSI-RS for a CSI report for a decrease in transmit power. Herein, powerControlOffset may mean a power offset of a PDSCH RE for an NZP CSI-RS RE. In addition, powerControlOffsetSS may mean a power offset of a non-zero power (NZP) CSI-RS RE for an SSS RE.

Hereinafter, an identification method using a CSI-RS identifier (ID) will be described.

The IAB-DU may identify and configure a CSI-RS ID to the IAB-MT according to a pre-agreed method. In this case, an ID may be given by being divided into a power control usage (transmit power increase request/decrease request) and a channel report usage, or an overlapping ID may be given to a single CSI-RS. If two IDs are given to a single CSI-RS, the IDs may be used by being identified according to whether the purpose is power control while other content is identical when the IAB-MT performs a channel report.

Hereinafter, an identification method using a scrambling ID will be described.

A scrambling ID used in sequence generation of a CSI-RS may be used to identify whether it is a CSI-RS used in power control. Each CSI-RS uses a different scrambling ID to identify a CSI-RS for power control and a CSI-RS for other usages according to a pre-agreement. Alternatively, one scrambling ID may be used to identify each of two groups of the CSI-RS for power control and the CSI-RS for other usages. In this case, the scrambling ID may be applied cell-specifically.

Hereinafter, an identification method using a frequency density or a frequency band will be described.

It may be specified that a CSI-RS received with specific frequency density or frequency band according to pre-agreed information is aiming at a power control request. Accordingly, the CSI-RS may be roughly classified into two types, i.e., a CSI-RS for the power control request and a CSI-RS for other usages, or may be classified into three types, i.e., a CSI-RS requesting to increase transmit power, a CSI-RS requesting to decrease the transmit power, and a CSI-RS not requesting power control.

Hereinafter, an identification method using quasi co-location (QCL) information will be described.

In a CSI-RS-Resource-Mobility field, a QCL of associatedSSB and IsQuasiColocated items may be used for identification. Alternatively, a new field may be defined to assign the QCL information. A usage of a CSI-RS may be classified according to the QCL information, the associatedSSB, and a presence/absence of the QCL information. For example, a normal CSI-RS may be configured using a QCL relationship with an SSB, and a CSI-RS for increasing or decreasing transmit power may be configured using a QCL relationship with the normal CSI-RS other than the SSB. Alternatively, the CSI-RS may be identified according to pre-agreed information by indicating the QCL relationship with different SSBs.

Hereinafter, content of a CSI-RS report for a downlink power control request will be described.

A CSI report may exist for each CSI-RS configuration. The CSI-RS configuration may be configured periodically, semi-statically, and aperiodically, and a report configuration may also be configured periodically, semi-statically, and aperiodically. In the periodic report, dynamic triggering/activation is not supported. In the semi-static report, transmission may be performed through a PUCCH when a UE receives an activation command, or through a PUSCH when a triggering DCI is received. The aperiodic report may be trigged using a DCI, and a subselection indication may be possible according to an aperiodic CSI trigger state subsection of NR.

An IAB-DU may be configured such that an IAB-MT reports a power offset request together when reporting CSI. The power offset request may be performed explicitly. Alternatively, the power control request may be added to CSI report content (e.g., RI, PMI, CQI, SINR, RSRP, etc.).

The transmit power boosting/decreasing request of the CSI-RS may mean a relative value (dB) or an absolute value (dBm) against transmit power at a timing of receiving the transmit power boosting/decreasing request according to a designated value or a rule pre-agreed between the IAB-DU and the IAB-MT. For example, when the IAB-DU receives a report of a CSI-RS which means the transmit power decreasing request, it may be determined that there is a request to decrease by 1dB against current transmit power.

Hereinafter, another method for a downlink power control request of an IAB-MT will be described.

An IAB-DU may configure the IAB-MT to report the downlink power control request in a form of UCI. When it is reported in the form of UCI, it may mean that it is reported by being combined entirely or in part with the existing UCI content, that is, scheduling request (SR), HARQ, and CSI, or may mean that new content of the downlink power control request is included. For example, 1 bit may be added to the HARQ to imply/indicate a downlink power boost or decrease if 1 and needlessness of downlink power control if 0. Alternatively, 2 bits may be added to the HARQ to imply/indicate a downlink power boost, a downlink power decrease, and needlessness of downlink power control. Alternatively, by being added to a CSI report, whether a resource for transmitting a corresponding CSI is subjected to downlink power control may be transferred.

The IAB-DU may be configured so that the IAB-MT performs a report through MAC-CE. For example, downlink power control may be requested by attaching a guard-symbol or the like to the MAC-CE to be transmitted.

The IAB-CU may configure single or multiple IAB-DUs not to perform transmission through F1-AP with at least a certain level of power, based on UE capability.

The IAB-MT may explicitly perform a report by designating a range of a power offset thereof. For example, the IAB-MT may perform a report for requesting to designate a power offset by using only a value in the range of 0 to 8dB.

Since powerControlOffset of the IAB-DU is currently set to an integer (-8, ..., 15), a restriction may be applied thereto, or the IAB-MT may configure to have a restriction based on a range for performing a frequency division multiplexing (FDM)/spatial division multiplexing (SDM) according to capability thereof. Alternatively, when receive power is set to at least a specific threshold, the IAB-MT may not perform the FDM operation and may report that the TDM operation will be performed.

Hereinafter, a downlink power control applying timing and report will be described.

A specific timing at which a CSI-RS resource index/CSI-RS resource set index for the purpose of downlink power control is reported and a time resource location at which the reported CSI-RS resource is applied may be reported together. For example, a parent IAB-DU may assume that the IAB-MT is aware of a time duration for performing a simultaneous reception/reception operation with the IAB-DU, and the parent IAB-DU may have transmit power preferred by the IAB-MT in reception in the time duration or may instruct to report a CSI-RS resource index in which preferred transmit power is configured. Alternatively, for another example, the IAB-MT may report a time duration in which the IAB-MT performs the simultaneous reception/reception operation to the parent IAB-DU, and in this case, may have transmit power preferred by the IAB-MT in reception or may report a CSI-RS resource index in which preferred transmit power is configured.

The timing of applying the downlink power control request may consider one or more of the following cases. First, the timing of applying the downlink power control request may be reported with a slot number or a symbol number. Second, a case of dividing a subframe set into two parts and applying power configured for each part may be considered. Third, a method of defining and reporting transmit power for each slot set may be considered. Finally, the pre-agreed simultaneous operation (non-TDM) duration of the IAB-MT may be reported with an index based on a timing of receiving a CSI-RS or based on a timing of reporting the CSI-RS, or an absolute time value may be reported.

The aforementioned downlink power control may be applied dynamically through a report of a CSI-RS for downlink power control, MAC-CE, or the like. Alternatively, the aforementioned downlink power control may be applied semi-statically through F1-AP, RRC, or the like.

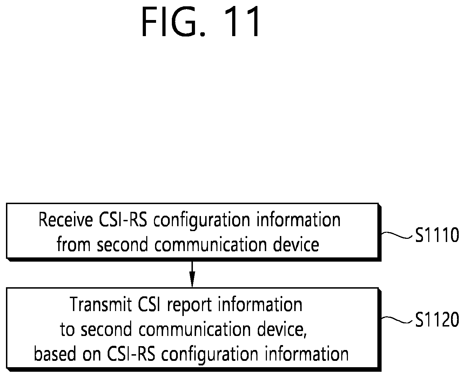

FIG. 11 is a flowchart for an example of a power control method of a first communication device according to some implementations of the present specification. In FIG. 11, the first communication device may be an IAB node or a UE, and the second communication device may be a parent node of the IAB node or a BS.

Referring to FIG. 11, the first communication device receives CSI-RS configuration information from the second communication device (S1110). Herein, the CSI-RS configuration information may include information on a CSI-RS for power control. For example, as described above, the CSI-RS configuration information may include QCL information on the CSI-RS related to power control.

The first communication device transmits CSI report information to the second communication device, based on the CSI-RS configuration information (S1120). Herein, for example, the CSI report information may include information related to power control. Herein, the information related to power control may include content of the aforementioned CSI-RS report for the power control request.

Herein, although not shown in FIG. 11, after transmitting the CSI report information, the first communication device may receive a signal from the second communication device. Herein, comparing with first transmit power of a first signal received by the first communication device from the second communication device before transmitting the CSI report information, second transmit power of a second signal received by the first communication device from the second communication device after transmitting the CSI report information may be changed by the second communication device, based on the CSI report information.

Herein, the second communication device may transmit a response signal for the CSI report information to the first communication device. Herein, the response signal may report a change of transmit power of the second communication device. Alternatively, without transmission of the response signal, the second communication device may change transmit power for the first communication device, based on the CSI report information.

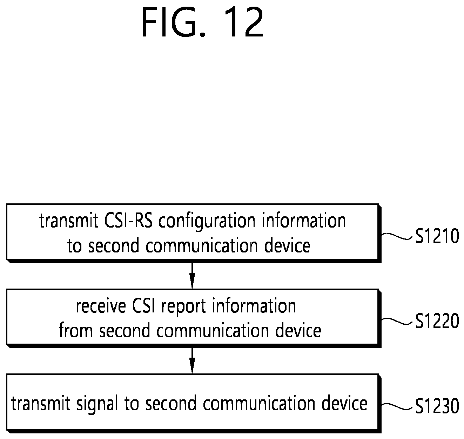

FIG. 12 is a flowchart for an example of a method in which a first communication device performs power control for a second communication device according to some implementations of the present specification. In FIG. 12, the first communication device may be an IAB node or a BS, and the second communication device may be a child node of the IAB node or a UE.

Referring to FIG. 12, the first communication device transmits CSI-RS configuration information to the second communication device (S1210). Herein, the CSI-RS configuration information may include information on a CSI-RS for power control. For example, as described above, the CSI-RS configuration information may include QCL information on the CSI-RS related to power control.

The first communication device receives CSI report information from the second communication device (S1220). Herein, for example, the CSI report information may include information related to power control. Herein, the information related to power control may include contents of the aforementioned report of the CSI-RS for the power control request.

The first communication device transmits a signal to the second communication device (S1230). Herein, transmit power of the signal may be determined based on the CSI report information.

Meanwhile, in FIG. 12, the first communication device may transmit a response signal for the CSI report information to the second communication device. Herein, the response signal may report a change of transmit power of a signal transmitted by the first communication device to the second communication device. Alternatively, without transmission of the response signal, the first communication device may change transmit power for the second communication device, based on the CSI report information.

In addition to the examples of FIG. 11 and FIG. 12, it is apparent that various embodiments proposed in the present specification are applicable to power control. Therefore, redundant descriptions on FIG. 11 and FIG. 12 will be omitted.

Methods proposed in the present specification may include at least one computer readable medium, which is executed by at least one processor, one or more processors, and one or more memoires operatively coupled by means of the one or more processors and storing instructions, in addition to a UE, a BS, and an IAB node. The one or more processors may also be performed by an apparatus configured to control the UE, the BS, and the IAB node and performing methods proposed in the present specification by executing the instructions. In addition, according to the methods proposed in the present specification, it is apparent that an operation to be performed by another UE, another BS, and another IAB node, corresponding to an operation performed by the UE, the BS, and the IAB node, may be considered.

Hereinafter, an example of a communication system to which the present disclosure is applied will be described.

Although not limited to this, various descriptions, functions, procedures, proposals, methods, and/or operation flowcharts of the present disclosure disclosed in this document may be applied to various fields requiring wireless communication/connection (e.g., 5G) between devices.

Hereinafter, it will be exemplified in more detail with reference to the drawings. In the following drawings/descriptions, the same reference numerals may represent the same or corresponding hardware blocks, software blocks, or functional blocks, unless otherwise indicated.

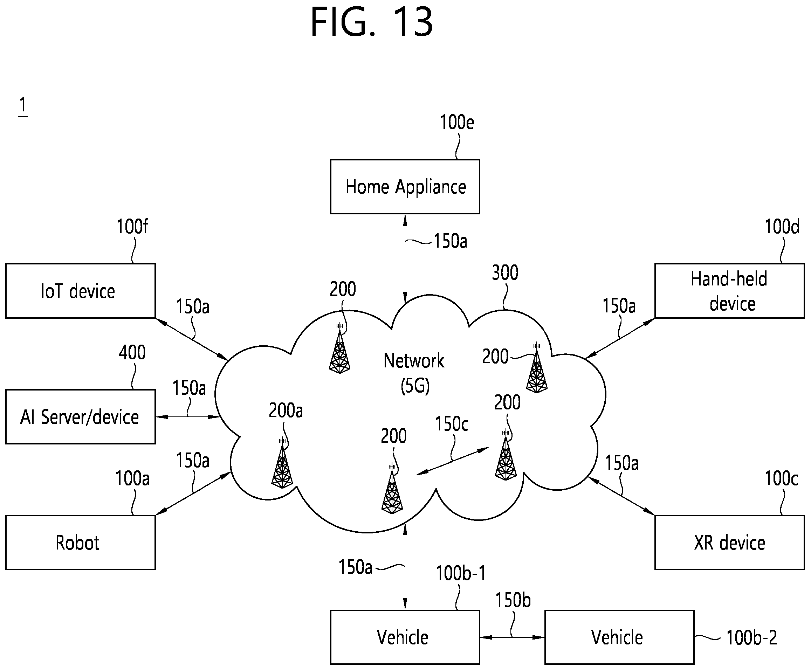

FIG. 13 shows a communication system (1), in accordance with an embodiment of the present disclosure.

Referring to FIG. 13, a communication system (1) to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot (100a), vehicles (100b-1, 100b-2), an eXtended Reality (XR) device (100c), a hand-held device (100d), a home appliance (100e), an Internet of Things (IoT) device (100f), and an Artificial Intelligence (AI) device/server (400). For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, and so on. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device (200a) may operate as a BS/network node with respect to other wireless devices.

Here, the wireless communication technology implemented in the wireless device of the present specification may include a narrowband Internet of Things for low-power communication as well as LTE, NR, and 6G. In this case, for example, the NB-IoT technology may be an example of a Low Power Wide Area Network (LPWAN) technology. In addition, it may be implemented in standards such as LTE Cat NB1 and/or LTE Cat NB2, and is not limited to the above-described name. Additionally or alternatively, the wireless communication technology implemented in the wireless device of the present specification may perform communication based on LTE-M technology. In this case, as an example, the LTE-M technology may be an example of an LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described name. Additionally or alternatively, the wireless communication technology implemented in the wireless device of the present specification may include at least one of ZigBee, Bluetooth, and Low Power Wide Area Network (LPWAN) in consideration of low-power communication, and is not limited to the above-described name. For example, the ZigBee technology can create PAN (personal area networks) related to small/low-power digital communication based on various standards such as IEEE 802.15.4, and can be called by various names.

The wireless devices (100a~100f) may be connected to the network (300) via the BSs (200). An AI technology may be applied to the wireless devices (100a~100f) and the wireless devices (100a~100f) may be connected to the AI server (400) via the network (300). The network (300) may be configured using a 3G network, a 4G (e.g., LTE) network, or a 5G (e.g., NR) network. Although the wireless devices (100a~100f) may communicate with each other through the BSs (200)/network (300), the wireless devices (100a~100f) may perform direct communication (e.g., sidelink communication) with each other without passing through the BSs/network. For example, the vehicles (100b-1, 100b-2) may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices (100a~100f).

Wireless communication/connections (150a, 150b, 150c) may be established between the wireless devices (100a~100f)/BS (200), or BS (200)/BS (200). Herein, the wireless communication/connections may be established through various RATs (e.g., 5G NR) such as uplink/downlink communication (150a), sidelink communication (150b) (or, D2D communication), or inter BS communication (e.g. relay, Integrated Access Backhaul (IAB)). The wireless devices and the BSs/the wireless devices may transmit/receive radio signals to/from each other through the wireless communication/connections (150a, 150b). For example, the wireless communication/connections (150a, 150b) may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

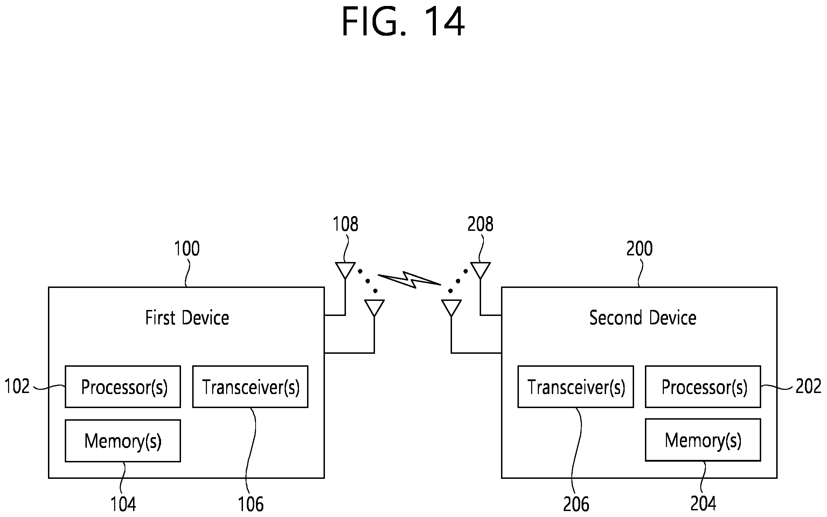

FIG. 14 shows wireless devices, in accordance with an embodiment of the present disclosure.

Referring to FIG. 14, a first wireless device (100) and a second wireless device (200) may transmit radio signals through a variety of RATs (e.g., LTE and NR). Herein, {the first wireless device (100) and the second wireless device (200)} may correspond to {the wireless device (100x), the BS (200)} and/or {the wireless device (100x), the wireless device (100x)} of FIG. 13.

The first wireless device (100) may include one or more processors (102) and one or more memories (104) and additionally further include one or more transceivers (106) and/or one or more antennas (108). The processor(s) (102) may control the memory(s) (104) and/or the transceiver(s) (106) and may be configured to implement the descriptions, functions, procedures, proposals, methods, and/or operational flowcharts disclosed in this document. For example, the processor(s) (102) may process information within the memory(s) (104) to generate first information/signals and then transmit radio signals including the first information/signals through the transceiver(s) (106). The processor(s) (102) may receive radio signals including second information/signals through the transceiver (106) and then store information obtained by processing the second information/signals in the memory(s) (104). The memory(s) (104) may be connected to the processor(s) (102) and may store a variety of information related to operations of the processor(s) (102). For example, the memory(s) (104) may store software code including commands for performing a part or the entirety of processes controlled by the processor(s) (102) or for performing the descriptions, functions, procedures, proposals, methods, and/or operational flowcharts disclosed in this document. Herein, the processor(s) (102) and the memory(s) (104) may be a part of a communication modem/circuit/chip designed to implement RAT (e.g., LTE or NR). The transceiver(s) (106) may be connected to the processor(s) (102) and transmit and/or receive radio signals through one or more antennas (108). Each of the transceiver(s) (106) may include a transmitter and/or a receiver. The transceiver(s) (106) may be interchangeably used with Radio Frequency (RF) unit(s). In the present disclosure, the wireless device may represent a communication modem/circuit/chip.

The second wireless device (200) may include one or more processors (202) and one or more memories (204) and additionally further include one or more transceivers (206) and/or one or more antennas (208). The processor(s) (202) may control the memory(s) (204) and/or the transceiver(s) (206) and may be configured to implement the descriptions, functions, procedures, proposals, methods, and/or operational flowcharts disclosed in this document. For example, the processor(s) (202) may process information within the memory(s) (204) to generate third information/signals and then transmit radio signals including the third information/signals through the transceiver(s) (206). The processor(s) (202) may receive radio signals including fourth information/signals through the transceiver(s) (106) and then store information obtained by processing the fourth information/signals in the memory(s) (204). The memory(s) (204) may be connected to the processor(s) (202) and may store a variety of information related to operations of the processor(s) (202). For example, the memory(s) (204) may store software code including commands for performing a part or the entirety of processes controlled by the processor(s) (202) or for performing the descriptions, functions, procedures, proposals, methods, and/or operational flowcharts disclosed in this document. Herein, the processor(s) (202) and the memory(s) (204) may be a part of a communication modem/circuit/chip designed to implement RAT (e.g., LTE or NR). The transceiver(s) (206) may be connected to the processor(s) (202) and transmit and/or receive radio signals through one or more antennas (208). Each of the transceiver(s) (206) may include a transmitter and/or a receiver. The transceiver(s) (206) may be interchangeably used with RF unit(s). In the present disclosure, the wireless device may represent a communication modem/circuit/chip.

Hereinafter, hardware elements of the wireless devices (100, 200) will be described more specifically. One or more protocol layers may be implemented by, without being limited to, one or more processors (102, 202). For example, the one or more processors (102, 202) may implement one or more layers (e.g., functional layers such as PHY, MAC, RLC, PDCP, RRC, and SDAP). The one or more processors (102, 202) may generate one or more Protocol Data Units (PDUs) and/or one or more Service Data Unit (SDUs) according to the descriptions, functions, procedures, proposals, methods, and/or operational flowcharts disclosed in this document. The one or more processors (102, 202) may generate messages, control information, data, or information according to the descriptions, functions, procedures, proposals, methods, and/or operational flowcharts disclosed in this document. The one or more processors (102, 202) may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers (106, 206). The one or more processors (102, 202) may receive the signals (e.g., baseband signals) from the one or more transceivers (106, 206) and obtain the PDUs, SDUs, messages, control information, data, or information according to the descriptions, functions, procedures, proposals, methods, and/or operational flowcharts disclosed in this document.

The one or more processors (102, 202) may be referred to as controllers, microcontrollers, microprocessors, or microcomputers. The one or more processors (102, 202) may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors (102, 202). The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors (102, 202) or stored in the one or more memories (104, 204) so as to be driven by the one or more processors (102, 202). The descriptions, functions, procedures, proposals, methods, and/or operational flowcharts disclosed in this document may be implemented using firmware or software in the form of code, commands, and/or a set of commands.

The one or more memories (104, 204) may be connected to the one or more processors (102, 202) and store various types of data, signals, messages, information, programs, code, instructions, and/or commands. The one or more memories (104, 204) may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories (104, 204) may be located at the interior and/or exterior of the one or more processors (102, 202). The one or more memories (104, 204) may be connected to the one or more processors (102, 202) through various technologies such as wired or wireless connection.

The one or more transceivers (106, 206) may transmit user data, control information, and/or radio signals/channels, mentioned in the methods and/or operational flowcharts of this document, to one or more other devices. The one or more transceivers (106, 206) may receive user data, control information, and/or radio signals/channels, mentioned in the descriptions, functions, procedures, proposals, methods, and/or operational flowcharts disclosed in this document, from one or more other devices. For example, the one or more transceivers (106, 206) may be connected to the one or more processors (102, 202) and transmit and receive radio signals. For example, the one or more processors (102, 202) may perform control so that the one or more transceivers (106, 206) may transmit user data, control information, or radio signals to one or more other devices. The one or more processors (102, 202) may perform control so that the one or more transceivers (106, 206) may receive user data, control information, or radio signals from one or more other devices. The one or more transceivers (106, 206) may be connected to the one or more antennas (108, 208) and the one or more transceivers (106, 206) may be configured to transmit and receive user data, control information, and/or radio signals/channels, mentioned in the descriptions, functions, procedures, proposals, methods, and/or operational flowcharts disclosed in this document, through the one or more antennas (108, 208). In this document, the one or more antennas may be a plurality of physical antennas or a plurality of logical antennas (e.g., antenna ports). The one or more transceivers (106, 206) may convert received radio signals/channels, and so on, from RF band signals into baseband signals in order to process received user data, control information, radio signals/channels, and so on, using the one or more processors (102, 202). The one or more transceivers (106, 206) may convert the user data, control information, radio signals/channels, and so on, processed using the one or more processors (102, 202) from the base band signals into the RF band signals. To this end, the one or more transceivers (106, 206) may include (analog) oscillators and/or filters.

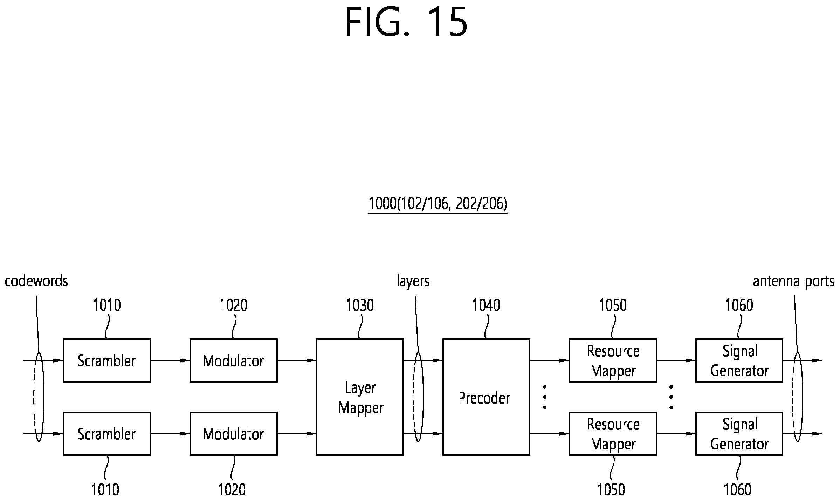

FIG. 15 shows a signal process circuit for a transmission signal, in accordance with an embodiment of the present disclosure.

Referring to FIG. 15, a signal processing circuit (1000) may include scramblers (1010), modulators (1020), a layer mapper (1030), a precoder (1040), resource mappers (1050), and signal generators (1060). An operation/function of FIG. 15 may be performed, without being limited to, the processors (102, 202) and/or the transceivers (106, 206) of FIG. 14. Hardware elements of FIG. 15 may be implemented by the processors (102, 202) and/or the transceivers (106, 206) of FIG. 14. For example, blocks 1010~1060 may be implemented by the processors (102, 202) of FIG. 14. Alternatively, the blocks 1010~1050 may be implemented by the processors (102, 202) of FIG. 14 and the block 1060 may be implemented by the transceivers (106, 206) of FIG. 14.

Codewords may be converted into radio signals via the signal processing circuit (1000) of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers (1010). Scramble sequences used for scrambling may be generated based on an initialization value, and the initialization value may include ID information of a wireless device. The scrambled bit sequences may be modulated to modulation symbol sequences by the modulators (1020). A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper (1030). Modulation symbols of each transport layer may be mapped (precoded) to corresponding antenna port(s) by the precoder (1040). Outputs z of the precoder (1040) may be obtained by multiplying outputs y of the layer mapper (1030) by an N*M precoding matrix W. Herein, N is the number of antenna ports and M is the number of transport layers. The precoder (1040) may perform precoding after performing transform precoding (e.g., DFT) for complex modulation symbols. Alternatively, the precoder (1040) may perform precoding without performing transform precoding.

The resource mappers (1050) may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators (1060) may generate radio signals from the mapped modulation symbols and the generated radio signals may be transmitted to other devices through each antenna. For this purpose, the signal generators (1060) may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures (1010~1060) of FIG. 15. For example, the wireless devices (e.g., 100, 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

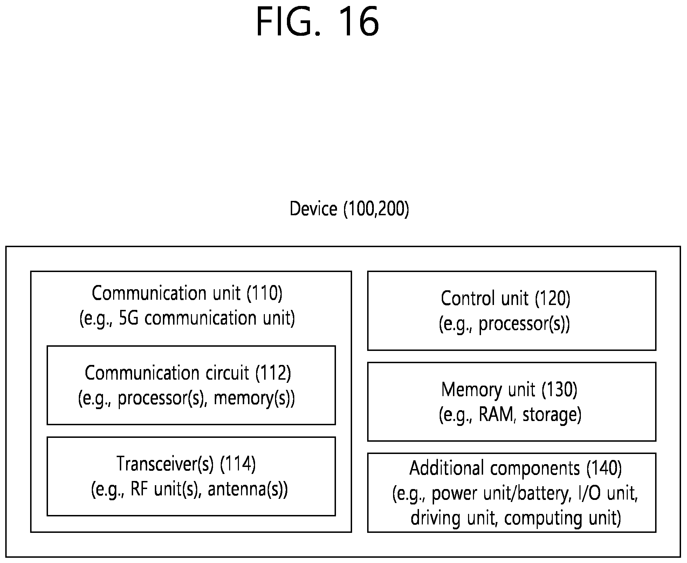

FIG. 16 shows another example of a wireless device, in accordance with an embodiment of the present disclosure. The wireless device may be implemented in various forms according to a use-case/service (refer to FIG. 13).

Referring to FIG. 16, wireless devices (100, 200) may correspond to the wireless devices (100, 200) of FIG. 14 and may be configured by various elements, components, units/portions, and/or modules. For example, each of the wireless devices (100, 200) may include a communication unit (110), a control unit (120), a memory unit (130), and additional components (140). The communication unit may include a communication circuit (112) and transceiver(s) (114). For example, the communication circuit (112) may include the one or more processors (102, 202) and/or the one or more memories (104, 204) of FIG. 14. For example, the transceiver(s) (114) may include the one or more transceivers (106, 206) and/or the one or more antennas (108, 208) of FIG. 14. The control unit (120) is electrically connected to the communication unit (110), the memory (130), and the additional components (140) and controls overall operation of the wireless devices. For example, the control unit (120) may control an electric/mechanical operation of the wireless device based on programs/code/commands/information stored in the memory unit (130). The control unit (120) may transmit the information stored in the memory unit (130) to the exterior (e.g., other communication devices) via the communication unit (110) through a wireless/wired interface or store, in the memory unit (130), information received through the wireless/wired interface from the exterior (e.g., other communication devices) via the communication unit (110).

The additional components (140) may be variously configured according to types of wireless devices. For example, the additional components (140) may include at least one of a power unit/battery, input/output (I/O) unit, a driving unit, and a computing unit. The wireless device may be implemented in the form of, without being limited to, the robot (100a of FIG. 13), the vehicles (100b-1, 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, and so on. The wireless device may be used in a mobile or fixed place according to a use-example/service.

In FIG. 16, the entirety of the various elements, components, units/portions, and/or modules in the wireless devices (100, 200) may be connected to each other through a wired interface or at least a part thereof may be wirelessly connected through the communication unit (110). For example, in each of the wireless devices (100, 200), the control unit (120) and the communication unit (110) may be connected by wire and the control unit (120) and first units (e.g., 130, 140) may be wirelessly connected through the communication unit (110). Each element, component, unit/portion, and/or module within the wireless devices (100, 200) may further include one or more elements. For example, the control unit (120) may be configured by a set of one or more processors. As an example, the control unit (120) may be configured by a set of a communication control processor, an application processor, an Electronic Control Unit (ECU), a graphical processing unit, and a memory control processor. As another example, the memory (130) may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

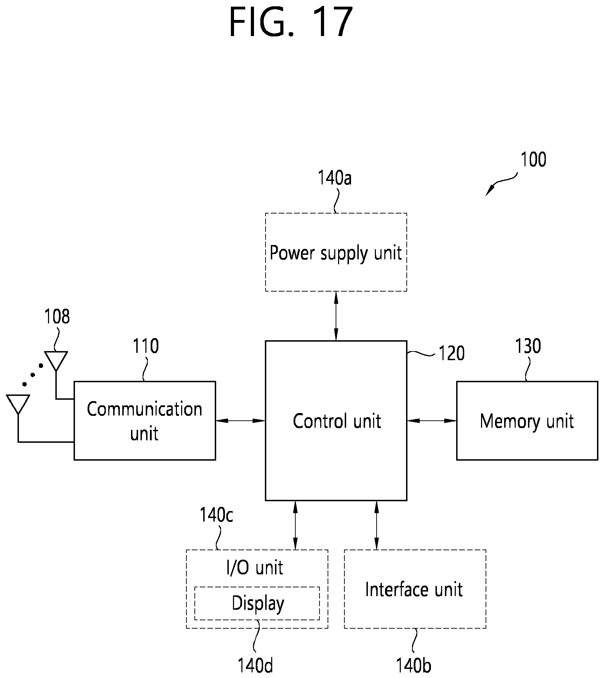

FIG. 17 shows a hand-held device, in accordance with an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 17, a hand-held device (100) may include an antenna unit (108), a communication unit (110), a control unit (120), a memory unit (130), a power supply unit (140a), an interface unit (140b), and an I/O unit (140c). The antenna unit (108) may be configured as a part of the communication unit (110). Blocks 110~130/140a~140c correspond to the blocks 110~130/140 of FIG. 16, respectively.

The communication unit (110) may transmit and receive signals (e.g., data and control signals) to and from other wireless devices or BSs. The control unit (120) may perform various operations by controlling constituent elements of the hand-held device (100). The control unit (120) may include an Application Processor (AP). The memory unit (130) may store data/parameters/programs/code/commands needed to drive the hand-held device (100). The memory unit (130) may store input/output data/information. The power supply unit (140a) may supply power to the hand-held device (100) and include a wired/wireless charging circuit, a battery, and so on. The interface unit (140b) may support connection of the hand-held device (100) to other external devices. The interface unit (140b) may include various ports (e.g., an audio I/O port and a video I/O port) for connection with external devices. The I/O unit (140c) may input or output video information/signals, audio information/signals, data, and/or information input by a user. The I/O unit (140c) may include a camera, a microphone, a user input unit, a display unit (140d), a speaker, and/or a haptic module.

As an example, in the case of data communication, the I/O unit (140c) may obtain information/signals (e.g., touch, text, voice, images, or video) input by a user and the obtained information/signals may be stored in the memory unit (130). The communication unit (110) may convert the information/signals stored in the memory into radio signals and transmit the converted radio signals to other wireless devices directly or to a BS. The communication unit (110) may receive radio signals from other wireless devices or the BS and then restore the received radio signals into original information/signals. The restored information/signals may be stored in the memory unit (130) and may be output as various types (e.g., text, voice, images, video, or haptic) through the I/O unit (140c).

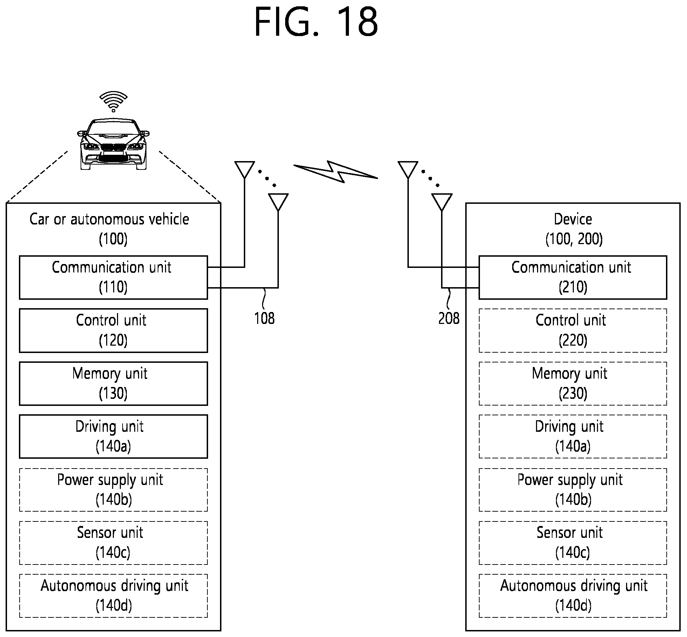

FIG. 18 shows a vehicle or an autonomous vehicle, in accordance with an embodiment of the present disclosure. The vehicle or autonomous vehicle may be implemented by a mobile robot, a car, a train, a manned/unmanned Aerial Vehicle (AV), a ship, and so on.

Referring to FIG. 18, a vehicle or autonomous vehicle (100) may include an antenna unit (108), a communication unit (110), a control unit (120), a driving unit (140a), a power supply unit (140b), a sensor unit (140c), and an autonomous driving unit (140d). The antenna unit (108) may be configured as a part of the communication unit (110). The blocks 110/130/140a~140d correspond to the blocks 110/130/140 of FIG. 16, respectively.

The communication unit (110) may transmit and receive signals (e.g., data and control signals) to and from external devices such as other vehicles, BSs (e.g., gNBs and road side units), and servers. The control unit (120) may perform various operations by controlling elements of the vehicle or the autonomous vehicle (100). The control unit (120) may include an Electronic Control Unit (ECU). The driving unit (140a) may cause the vehicle or the autonomous vehicle (100) to drive on a road. The driving unit (140a) may include an engine, a motor, a powertrain, a wheel, a brake, a steering device, and so on. The power supply unit (140b) may supply power to the vehicle or the autonomous vehicle (100) and include a wired/wireless charging circuit, a battery, and so on. The sensor unit (140c) may obtain a vehicle state, ambient environment information, user information, and so on. The sensor unit (140c) may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit (140d) may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit (110) may receive map data, traffic information data, and so on, from an external server. The autonomous driving unit (140d) may generate an autonomous driving path and a driving plan from the obtained data. The control unit (120) may control the driving unit (140a) such that the vehicle or the autonomous vehicle (100) may move along the autonomous driving path according to the driving plan (e.g., speed/direction control). In the middle of autonomous driving, the communication unit (110) may aperiodically/periodically obtain recent traffic information data from the external server and obtain surrounding traffic information data from neighboring vehicles. In the middle of autonomous driving, the sensor unit (140c) may obtain a vehicle state and/or surrounding environment information. The autonomous driving unit (140d) may update the autonomous driving path and the driving plan based on the newly obtained data/information. The communication unit (110) may transfer information on a vehicle position, the autonomous driving path, and/or the driving plan to the external server. The external server may predict traffic information data using AI technology, and so on, based on the information collected from vehicles or autonomous vehicles and provide the predicted traffic information data to the vehicles or the autonomous vehicles.

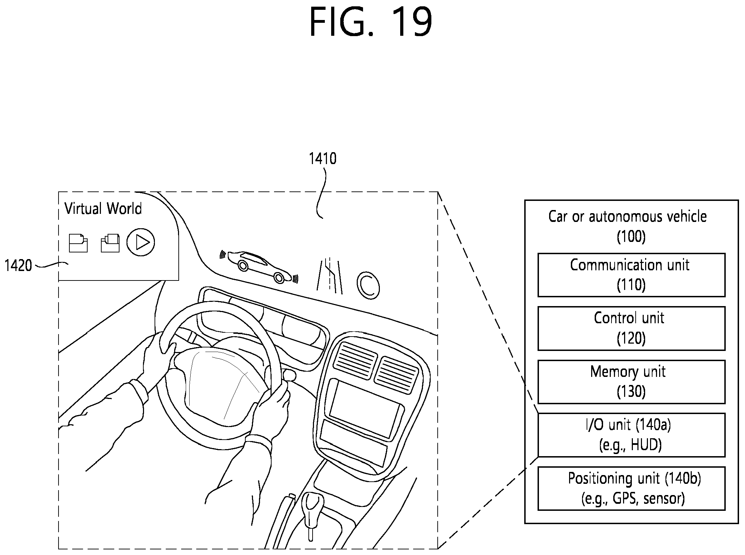

FIG. 19 shows a vehicle, in accordance with an embodiment of the present disclosure. The vehicle may be implemented as a transport means, an aerial vehicle, a ship, and so on.

Referring to FIG. 19, a vehicle (100) may include a communication unit (110), a control unit (120), a memory unit (130), an I/O unit (140a), and a positioning unit (140b). Herein, the blocks 110~130/140a~140b correspond to blocks 110~130/140 of FIG. 16.

The communication unit (110) may transmit and receive signals (e.g., data and control signals) to and from external devices such as other vehicles or BSs. The control unit (120) may perform various operations by controlling constituent elements of the vehicle (100). The memory unit (130) may store data/parameters/programs/code/commands for supporting various functions of the vehicle (100). The I/O unit (140a) may output an AR/VR object based on information within the memory unit (130). The I/O unit (140a) may include an HUD. The positioning unit (140b) may obtain information on the position of the vehicle (100). The position information may include information on an absolute position of the vehicle (100), information on the position of the vehicle (100) within a traveling lane, acceleration information, and information on the position of the vehicle (100) from a neighboring vehicle. The positioning unit (140b) may include a GPS and various sensors.

As an example, the communication unit (110) of the vehicle (100) may receive map information and traffic information from an external server and store the received information in the memory unit (130). The positioning unit (140b) may obtain the vehicle position information through the GPS and various sensors and store the obtained information in the memory unit (130). The control unit (120) may generate a virtual object based on the map information, traffic information, and vehicle position information and the I/O unit (140a) may display the generated virtual object in a window in the vehicle (1410, 1420). The control unit (120) may determine whether the vehicle (100) normally drives within a traveling lane, based on the vehicle position information. If the vehicle (100) abnormally exits from the traveling lane, the control unit (120) may display a warning on the window in the vehicle through the I/O unit (140a). In addition, the control unit (120) may broadcast a warning message regarding driving abnormity to neighboring vehicles through the communication unit (110). According to situation, the control unit (120) may transmit the vehicle position information and the information on driving/vehicle abnormality to related organizations.

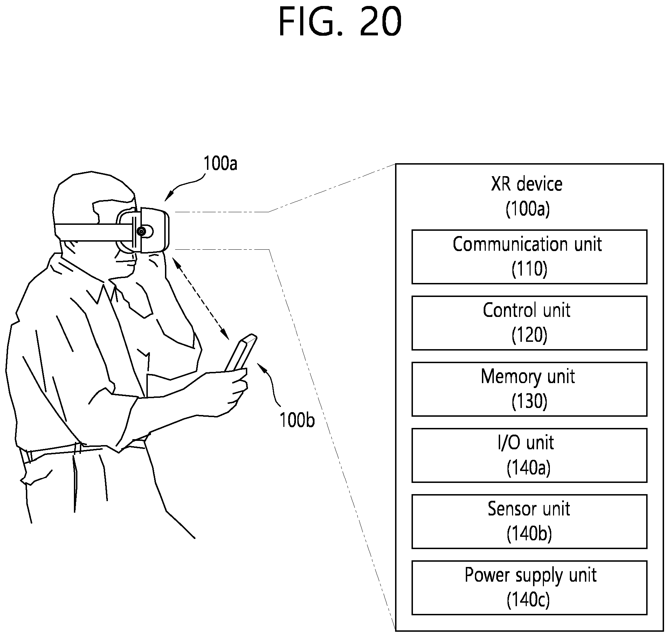

FIG. 20 shows an XR device, in accordance with an embodiment of the present disclosure. The XR device may be implemented by an HMD, an HUD mounted in a vehicle, a television, a smartphone, a computer, a wearable device, a home appliance, a digital signage, a vehicle, a robot, and so on.

Referring to FIG. 20, an XR device (100a) may include a communication unit (110), a control unit (120), a memory unit (130), an I/O unit (140a), a sensor unit (140b), and a power supply unit (140c). Herein, the blocks 110~130/140a~140c correspond to the blocks 110~130/140 of FIG. 31, respectively.

The communication unit (110) may transmit and receive signals (e.g., media data and control signals) to and from external devices such as other wireless devices, hand-held devices, or media servers. The media data may include video, images, and sound. The control unit (120) may perform various operations by controlling constituent elements of the XR device (100a). For example, the control unit (120) may be configured to control and/or perform procedures such as video/image acquisition, (video/image) encoding, and metadata generation and processing. The memory unit (130) may store data/parameters/programs/code/commands needed to drive the XR device (100a)/generate XR object. The I/O unit (140a) may obtain control information and data from the exterior and output the generated XR object. The I/O unit (140a) may include a camera, a microphone, a user input unit, a display unit, a speaker, and/or a haptic module. The sensor unit (140b) may obtain an XR device state, surrounding environment information, user information, and so on. The sensor unit (140b) may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit (140c) may supply power to the XR device (100a) and include a wired/wireless charging circuit, a battery, and so on.

For example, the memory unit (130) of the XR device (100a) may include information (e.g., data) needed to generate the XR object (e.g., an AR/VR/MR object). The I/O unit (140a) may receive a command for manipulating the XR device (100a) from a user and the control unit (120) may drive the XR device (100a) according to a driving command of a user. For example, when a user desires to watch a film or news through the XR device (100a), the control unit (120) transmits content request information to another device (e.g., a hand-held device 100b) or a media server through the communication unit (130). The communication unit (130) may download/stream content such as films or news from another device (e.g., the hand-held device 100b) or the media server to the memory unit (130). The control unit (120) may control and/or perform procedures such as video/image acquisition, (video/image) encoding, and metadata generation/-processing with respect to the content and generate/output the XR object based on information on a surrounding space or a real object obtained through the I/O unit (140a)/sensor unit (140b).

The XR device (100a) may be wirelessly connected to the hand-held device (100b) through the communication unit (110) and the operation of the XR device (100a) may be controlled by the hand-held device (100b). For example, the hand-held device (100b) may operate as a controller of the XR device (100a). To this end, the XR device (100a) may obtain information on a 3D position of the hand-held device (100b) and generate and output an XR object corresponding to the hand-held device (100b).

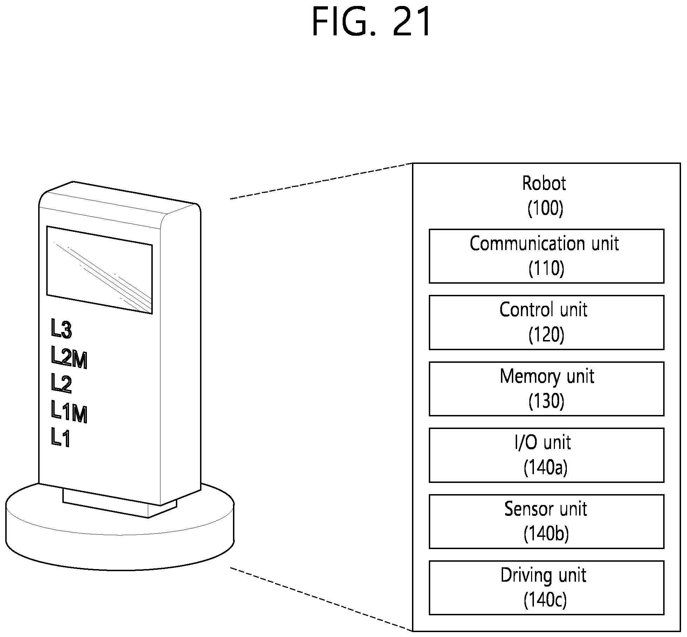

FIG. 21 shows a robot, in accordance with an embodiment of the present disclosure. The robot may be categorized into an industrial robot, a medical robot, a household robot, a military robot, and so on, according to a used purpose or field.

Referring to FIG. 21, a robot (100) may include a communication unit (110), a control unit (120), a memory unit (130), an I/O unit (140a), a sensor unit (140b), and a driving unit (140c). Herein, the blocks 110~130/140a~140c correspond to the blocks 110~130/140 of FIG. 16, respectively.

The communication unit (110) may transmit and receive signals (e.g., driving information and control signals) to and from external devices such as other wireless devices, other robots, or control servers. The control unit (120) may perform various operations by controlling constituent elements of the robot (100). The memory unit (130) may store data/parameters/programs/code/commands for supporting various functions of the robot (100). The I/O unit (140a) may obtain information from the exterior of the robot (100) and output information to the exterior of the robot (100). The I/O unit (140a) may include a camera, a microphone, a user input unit, a display unit, a speaker, and/or a haptic module. The sensor unit (140b) may obtain internal information of the robot (100), surrounding environment information, user information, and so on. The sensor unit (140b) may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, and so on. The driving unit (140c) may perform various physical operations such as movement of robot joints. In addition, the driving unit (140c) may cause the robot (100) to travel on the road or to fly. The driving unit (140c) may include an actuator, a motor, a wheel, a brake, a propeller, and so on.

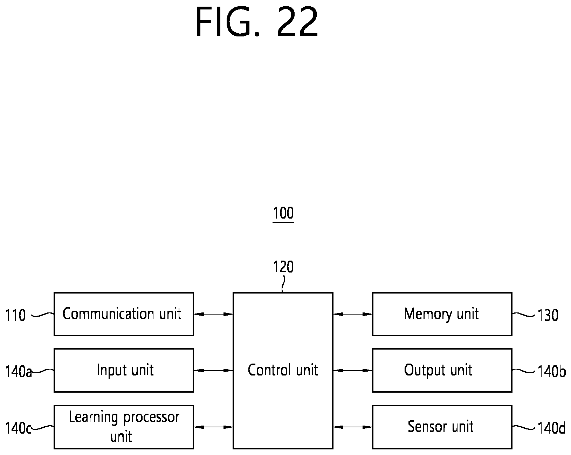

FIG. 22 shows an AI device, in accordance with an embodiment of the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, and so on.

Referring to FIG. 22, an AI device (100) may include a communication unit (110), a control unit (120), a memory unit (130), an I/O unit (140a/140b), a learning processor unit (140c), and a sensor unit (140d). The blocks 110~130/140a~140d correspond to blocks 110~130/140 of FIG. 16, respectively.

The communication unit (110) may transmit and receive wired/radio signals (e.g., sensor information, user input, learning models, or control signals) to and from external devices such as other AI devices (e.g., 100x, 200, 400 of FIG. 13) or an AI server (e.g., 400 of FIG. 13) using wired/wireless communication technology. To this end, the communication unit (110) may transmit information within the memory unit (130) to an external device and transmit a signal received from the external device to the memory unit (130).

The control unit (120) may determine at least one feasible operation of the AI device (100), based on information which is determined or generated using a data analysis algorithm or a machine learning algorithm. The control unit (120) may perform an operation determined by controlling constituent elements of the AI device (100). For example, the control unit (120) may request, search, receive, or use data of the learning processor unit (140c) or the memory unit (130) and control the constituent elements of the AI device (100) to perform a predicted operation or an operation determined to be preferred among at least one feasible operation. The control unit (120) may collect history information including the operation contents of the AI device (100) and operation feedback by a user and store the collected information in the memory unit (130) or the learning processor unit (140c) or transmit the collected information to an external device such as an AI server (400 of FIG. 14). The collected history information may be used to update a learning model.

The memory unit (130) may store data for supporting various functions of the AI device (100). For example, the memory unit (130) may store data obtained from the input unit (140a), data obtained from the communication unit (110), output data of the learning processor unit (140c), and data obtained from the sensor unit (140). The memory unit (130) may store control information and/or software code needed to operate/drive the control unit (120).

The input unit (140a) may obtain various types of data from the exterior of the AI device (100). For example, the input unit (140a) may obtain learning data for model learning, and input data to which the learning model is to be applied. The input unit (140a) may include a camera, a microphone, and/or a user input unit. The output unit (140b) may generate output related to a visual, auditory, or tactile sense. The output unit (140b) may include a display unit, a speaker, and/or a haptic module. The sensing unit (140) may obtain at least one of internal information of the AI device (100), surrounding environment information of the AI device (100), and user information, using various sensors. The sensor unit (140) may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit (140c) may learn a model consisting of artificial neural networks, using learning data. The learning processor unit (140c) may perform AI processing together with the learning processor unit of the AI server (400 of FIG. 13). The learning processor unit (140c) may process information received from an external device through the communication unit (110) and/or information stored in the memory unit (130). In addition, an output value of the learning processor unit (140c) may be transmitted to the external device through the communication unit (110) and may be stored in the memory unit (130).

**Claims**

1.  A method, comprising:

    receiving (S1110), by a first communication device, channel state information-reference signal, CSI-RS, configuration information from a second communication device, wherein the CSI-RS configuration information comprises quasi co-location, QCL, information of a CSI-RS related to power control; and
    transmitting (S1120), by the first communication device, CSI report information to the second communication device, based on the CSI-RS configuration information,
    wherein the CSI report information comprises information identifying the CSI-RS related to the power control, and
    wherein the CSI report information reports an index of a time-domain resource in which transmit power of a signal transmitted by the second communication device to the first communication device changes.

2.  The method of claim 1, wherein a resource of the CSI-RS related to the power control is different from resources of the remaining CSI-RSs.

3.  The method of claim 1, wherein at least one of a periodicity, power offset, and slot offset of the CSI-RS related to the power control is different from periodicities, power offsets, and slot offsets of the remaining CSI-RSs.

4.  The method of claim 1, wherein the CSI-RS related to the power control comprises a CSI-RS requesting a power increase and a CSI-RS requesting a power decrease.

5.  The method of claim 1, wherein the information identifying the CSI-RS related to the power control comprises an index of a resource for the CSI-RS related to the power control.

6.  The method of claim 1, wherein the first communication device is a terminal or an integrated access and backhaul, IAB, node, and the second communication device is a base station or a parent node of the IAB node.

7.  A first communication device, comprising:

    one or more memories storing instructions;
    one or more transceivers; and
    one or more processors coupling the one or more memoires and the one or more transceivers, wherein the one or more processors execute the instructions to:

        receive channel state information-reference signal, CSI-RS, configuration information from a second communication device, wherein the CSI-RS configuration information comprises quasi co-location, QCL, information of a CSI-RS related to power control; and

transmit CSI report information to the second communication device, based on the CSI-RS configuration information,

wherein the CSI report information comprises information identifying the CSI-RS related to the power control, and

wherein the CSI report information reports an index of a time-domain resource in which transmit power of a signal transmitted by the second communication device to the first communication device changes.

8. A method, comprising:

transmitting (S1210), by a first communication device, channel state information-reference signal, CSI-RS, configuration information to a second communication device, wherein the CSI-RS configuration information comprises quasi co-location, QCL, information of a CSI-RS related to power control;

receiving (S1220), by the first communication device, CSI report information from the second communication device; and

transmitting (S1230), by the first communication device, a signal to the second communication device, wherein transmit power of the signal is determined based on the CSI report information, and

wherein the CSI report information reports an index of a time-domain resource in which transmit power of a signal transmitted by the first communication device to the second communication device changes.

9. A first communication device comprising:

one or more memories storing instructions;

one or more transceivers; and

one or more processors coupling the one or more memoires and the one or more transceivers, wherein the one or more processors execute the instructions to:

transmit channel state information-reference signal, CSI-RS, configuration information to a second communication device, wherein the CSI-RS configuration information comprises quasi co-location, QCL, information of a CSI-RS related to power control;

receive CSI report information from the second communication device; and

transmit a signal to the second communication device,

wherein transmit power of the signal is determined based on the CSI report information, and

wherein the CSI report information reports an index of a time-domain resource in which transmit power of a signal transmitted by the first communication device to the second communication device changes.

10. At least one computer readable medium having an instruction executed by at least one processor, the instruction causing the processor to perform an operation comprising:

receiving channel state information-reference signal, CSI-RS, configuration information from a communication device, wherein the CSI-RS configuration information comprises quasi co-location, QCL, information of a CSI-RS related to power control; and

transmitting CSI report information to the communication device, based on the CSI-RS configuration information,

wherein the CSI report information comprises information identifying the CSI-RS related to the power control, and

wherein the CSI report information reports an index of a time-domain resource in which transmit power of a signal transmitted by the second communication device to the first communication device changes.

**Patentansprüche**

1. Verfahren, umfassend:

Empfangen (S1110) von Kanalzustandsinformations-Referenzsignal, CSI-RS, - Konfigurationsinformationen durch ein erstes Kommunikationsgerät von einem zweiten Kommunikationsgerät, wobei die CSI-RS-Konfigurationsinformationen Quasi-Co-Location, QCL, -Informationen eines CSI-RS umfassen, das sich auf die Leistungssteuerung bezieht; und

Senden (S1120) von CSI-Berichtsinformationen durch das erste Kommunikationsgerät an das zweite Kommunikationsgerät auf der Grundlage der CSI-RS-Konfigurationsinformationen,
wobei die CSI-Berichtsinformationen Informationen umfassen, die das mit der Leistungssteuerung verbundene CSI-RS identifizieren, und
wobei die CSI-Berichtsinformationen einen Index einer Zeitbereichsressource melden, in der sich eine Sendeleistung eines von dem zweiten Kommunikationsgerät an das erste Kommunikationsgerät gesendeten Signals ändert.

2. Verfahren nach Anspruch 1, wobei sich eine Ressource des CSI-RS, das sich auf die Leistungssteuerung bezieht, von Ressourcen der übrigen CSI-RSs unterscheidet.

3. Verfahren nach Anspruch 1, wobei sich mindestens eines von einer Periodizität, einem Leistungsversatz und einem Slot-Versatz des mit der Leistungssteuerung verbundenen CSI-RS von Periodizitäten, Leistungsversätzen und Slot-Versätzen der übrigen CSI-RS unterscheidet.

4. Verfahren nach Anspruch 1, wobei das mit der Leistungssteuerung verbundene CSI-RS ein CSI-RS, das eine Leistungserhöhung anfordert, und ein CSI-RS, das eine Leistungsreduzierung anfordert, umfasst.

5. Verfahren nach Anspruch 1, wobei die Information, die das mit der Leistungssteuerung verbundene CSI-RS identifiziert, einen Index einer Ressource für das mit der Leistungssteuerung verbundene CSI-RS umfasst.

6. Verfahren nach Anspruch 1, wobei das erste Kommunikationsgerät ein Endgerät oder ein integrierter Zugangs- und Backhaul, IAB, -Knoten ist und das zweite Kommunikationsgerät eine Basisstation oder ein übergeordneter Knoten des IAB-Knotens ist.

7. Erstes Kommunikationsgerät, umfassend:

einen oder mehrere Speicher, die Befehle speichern;
einen oder mehrere Transceiver; und
einen oder mehrere Prozessoren, die die einen oder mehreren Speicher und die einen oder mehreren Transceiver koppeln, wobei die einen oder mehreren Prozessoren die Befehle ausführen, um:

Channel State Information-Reference Signal, CSI-RS, - Konfigurationsinformationen von einem zweiten Kommunikationsgerät zu empfangen, wobei die CSI-RS-Konfigurationsinformationen Quasi-Co-Location, QCL, - Informationen eines CSI-RS umfassen, das sich auf die Leistungssteuerung bezieht; und
CSI-Berichtsinformationen an das zweite Kommunikationsgerät zu senden, basierend auf den CSI-RS-Konfigurationsinformationen,
wobei die CSI-Berichtsinformationen Informationen umfassen, die das CSI-RS identifizieren, das sich auf die Leistungssteuerung bezieht, und
wobei die CSI-Berichtsinformationen einen Index einer Zeitbereichsressource melden, in der sich die Sendeleistung eines von dem zweiten Kommunikationsgerät an das erste Kommunikationsgerät gesendeten Signals ändert.

8. Verfahren, umfassend:

Senden (S1210) von Kanalzustandsinformations-Referenzsignal, CSI-RS, - Konfigurationsinformationen durch ein erstes Kommunikationsgerät an ein zweites Kommunikationsgerät, wobei die CSI-RS-Konfigurationsinformationen Quasi-Co-Location, QCL, -Informationen eines CSI-RS umfassen, das sich auf die Leistungssteuerung bezieht;
Empfangen (S1220) von CSI-Berichtsinformationen von dem zweiten Kommunikationsgerät durch das erste Kommunikationsgerät; und
Senden (S1230) eines Signals durch das erste Kommunikationsgerät an das zweite Kommunikationsgerät, wobei die Sendeleistung des Signals auf der Grundlage der CSI-Berichtsinformationen bestimmt wird, und
wobei die CSI-Berichtsinformationen einen Index einer Zeitbereichsressource melden, in der sich eine Sendeleistung eines vom ersten Kommunikationsgerät an das zweite Kommunikationsgerät gesendeten Signals ändert.

9. Erstes Kommunikationsgerät, umfassend:

einen oder mehrere Speicher, die Befehle speichern;

einen oder mehrere Transceiver; und

einen oder mehrere Prozessoren, die die einen oder mehreren Speicher und die einen oder mehreren Transceiver koppeln, wobei der eine oder die mehreren Prozessoren die Befehle ausführen, um:

Kanalzustandsinformations-Referenzsignal, CSI-RS, -Konfigurationsinformationen an ein zweites Kommunikationsgerät zu senden, wobei die CSI-RS-Konfigurationsinformationen Quasi-Co-Location, QCL, -Informationen eines CSI-RS umfassen, die sich auf die Leistungssteuerung beziehen;

CSI-Berichtsinformationen von dem zweiten Kommunikationsgerät zu empfangen; und

ein Signal an das zweite Kommunikationsgerät zu senden,

wobei eine Sendeleistung des Signals auf der Grundlage der CSI-Berichtsinformationen bestimmt wird, und wobei die CSI-Berichtsinformationen einen Index einer Zeitbereichsressource melden, in der sich eine Sendeleistung eines vom ersten Kommunikationsgerät an das zweite Kommunikationsgerät gesendeten Signals ändert.

10. Mindestens ein computerlesbares Medium mit einer Anweisung, die von mindestens einem Prozessor ausgeführt wird, wobei die Anweisung den Prozessor veranlasst, einen Vorgang auszuführen, der umfasst:

Empfangen von Kanalzustandsinformations-Referenzsignal, CSI-RS, - Konfigurationsinformationen von einem Kommunikationsgerät, wobei die CSI-RS-Konfigurationsinformationen Quasi-Co-Location, QCL, -Informationen eines CSI-RS umfassen, die sich auf die Leistungssteuerung beziehen; und

Senden von CSI-Berichtsinformationen an das Kommunikationsgerät auf der Grundlage der CSI-RS-Konfigurationsinformationen,

wobei die CSI-Berichtsinformationen Informationen umfassen, die das CSI-RS identifizieren, das sich auf die Leistungssteuerung bezieht, und

wobei die CSI-Berichtsinformationen einen Index einer Zeitbereichsressource melden, in der sich eine Sendeleistung eines von dem zweiten Kommunikationsgerät an das erste Kommunikationsgerät gesendeten Signals ändert.

## Revendications

1. Procédé, comprenant:

la réception (S1110), par un premier dispositif de communication, des informations de configuration de signal de référence d'informations relatives à l'état de canal, CSI-RS, provenant d'un deuxième dispositif de communication, lesdites informations de configuration de CSI-RS comprenant des informations de quasi-colocalisation, QCL, d'un CSI-RS relatif à la commande de puissance; et

la transmission (S1120), par le premier dispositif de communication, d'informations de rapport CSI au deuxième dispositif de communication, sur la base des informations de configuration CSI-RS,

dans lequel les informations de rapport CSI comprennent des informations identifiant le CSI-RS relatives à la commande de puissance, et

dans lequel les informations de rapport CSI indiquent un index d'une ressource de domaine temporel dans lequel la puissance d'émission d'un signal transmis par le deuxième dispositif de communication au premier dispositif de communication varie.

2. Procédé selon la revendication 1, dans lequel une ressource du CSI-RS relative à la commande de la puissance diffère des ressources des autres CSI-RS.

3. Procédé selon la revendication 1, dans lequel au moins l'un parmi la périodicité, le décalage de puissance ou le décalage de créneau du CSI-RS se rapportant à la commande de puissance est différent des périodicités, décalages de puissance et décalages de créneau des autres CSI-RS.

4. Procédé selon la revendication 1, dans lequel le CSI-RS relatif à la commande de la puissance comprend un CSI-RS demandant une augmentation de la puissance et un CSI-RS demandant une diminution de la puissance.

5. Procédé selon la revendication 1, dans lequel les informations identifiant le CSI-RS relatif à la commande de puissance comprennent un index d'une ressource pour le CSI-RS relatif à la commande de puissance.

**6.** Procédé selon la revendication 1, dans lequel le premier dispositif de communication est un terminal ou un nœud d'accès et de liaison, IAB, et le deuxième dispositif de communication est une station de base ou un nœud parent du nœud IAB.

**7.** Premier dispositif de communication, comprenant:

une ou plusieurs mémoires stockant des instructions;
un ou plusieurs émetteurs-récepteurs et
un ou plusieurs processeurs couplant la ou les mémoires et le ou les émetteurs-récepteurs, dans lequel le ou les processeurs exécutent les instructions pour:

recevoir des informations de configuration de signal de référence d'informations relatives à l'état de canal, CSI-RS, provenant d'un deuxième dispositif de communication, lesdites informations de configuration de CSI-RS comprenant des informations de quasi-colocalisation, QCL, d'un CSI-RS liées à la commande de puissance; et
transmettre des informations de rapport CSI au deuxième dispositif de communication, sur la base des informations de configuration CSI-RS,
dans lequel les informations de rapport CSI comprennent des informations identifiant le CSI-RS relatives à la commande de puissance, et
dans lequel les informations de rapport CSI indiquent un index d'une ressource de domaine temporel dans lequel la puissance d'émission d'un signal transmis par le deuxième dispositif de communication au premier dispositif de communication varie.

**8.** Procédé, comprenant:

la transmission (S1210), par un premier dispositif de communication, des informations de configuration de signal de référence d'informations relatives à l'état de canal, CSI-RS, à un deuxième dispositif de communication, lesdites informations de configuration de CSI-RS comprenant des informations de quasi-colocalisation, QCL, d'un CSI-RS liées à la commande de puissance;
la réception (S1220), par le premier dispositif de communication, des informations de rapport CSI provenant du deuxième dispositif de communication, sur la base des informations de configuration CSI-RS; et
la transmission (S1230), par le premier dispositif de communication, d'un signal au deuxième dispositif de communication,
dans lequel la puissance de transmission du signal est déterminée sur la base des informations de rapport de CSI, et
dans lequel les informations de rapport CSI indiquent un index d'une ressource de domaine temporel dans lequel la puissance d'émission d'un signal transmis par le premier dispositif de communication au deuxième dispositif de communication varie.

**9.** Premier dispositif de communication comprenant:

une ou plusieurs mémoires stockant des instructions;
un ou plusieurs émetteurs-récepteurs et
un ou plusieurs processeurs couplant la ou les mémoires et le ou les émetteurs-récepteurs, dans lequel le ou les processeurs exécutent les instructions pour:

transmettre les informations de configuration de signal de référence d'informations relatives à l'état de canal, CSI-RS, à un deuxième dispositif de communication, lesdites informations de configuration de CSI-RS comprenant des informations de quasi-colocalisation, QCL, d'un CSI-RS relatif à la commande de puissance;
recevoir les informations de rapport de CSI provenant du deuxième dispositif de communication; et
transmettre un signal au deuxième dispositif de communication,
dans lequel la puissance de transmission du signal est déterminée sur la base des informations de rapport de CSI, et
dans lequel les informations de rapport CSI indiquent un index d'une ressource de domaine temporel dans lequel la puissance d'émission d'un signal transmis par le premier dispositif de communication au deuxième dispositif de communication varie.

10. Au moins un support informatique comportant une instruction exécutée par au moins un processeur, l'instruction amenant le processeur à réaliser une opération comprenant:

la réception des informations de configuration de signal de référence d'informations relatives à l'état de canal, CSI-RS, provenant d'un dispositif de communication, lesdites informations de configuration de CSI-RS comprenant des informations de quasi-colocalisation, QCL, d'un CSI-RS liées à la commande de puissance; et
la transmission des informations de rapport CSI au dispositif de communication, sur la base des informations de configuration CSI-RS,
dans lequel les informations de rapport CSI comprennent des informations identifiant le CSI-RS relatives à la commande de puissance, et

dans lequel les informations de rapport CSI indiquent un index d'une ressource de domaine temporel dans lequel la puissance d'émission d'un signal transmis par le deuxième dispositif de communication au premier dispositif de communication varie.

# FIG. 1

# FIG. 2

| UE | | eNB |
|---|---|---|
| PDCP | ←→ | PDCP |
| RLC | ←→ | RLC |
| MAC | ←→ | MAC |
| PHY | ←→ | PHY |

# FIG. 3

| UE | eNB | MME |
|---|---|---|
| NAS | | NAS |
| RRC | RRC | |
| PDCP | PDCP | |
| RLC | RLC | |
| MAC | MAC | |
| PHY | PHY | |

# FIG. 4

# FIG. 5

**gNB**

| RRM between cells |
|---|
| RB control |
| Connection mobility control |
| Wireless access control |
| Measurement setting and provision |
| Dynamic resource allocation (scheduler) |

NG-RAN

**AMF**

| NAS security |
|---|
| Idle state mobility processing |

**UPF**

| Mobility anchoring |
|---|
| PDU processing |

5GC

**SMF**

| UE IP address allocation |
|---|
| PDU session control |

Internet

# FIG. 6

# FIG. 7

Fiber transport

Backhaul link

Access link

# FIG. 8

**(a)**

NGC

| NG

IAB-donor
gNB

↕ NR Uu

IAB-node

↕ NR Uu

UE

UE: SA with NGC
IAB-node: SA with NGC

**(b)**

EPC          NGC

| S1          | NG

eNB —X2— IAB-donor
                gNB

↕ NR Uu

LTE Uu        IAB-node

↕ NR Uu

UE

UE: NAS with EPC
IAB-node: SA with NGC

**(c)**

EPC
                S1-U

| S1          IAB-donor
eNB —X2—      gNB

↕ NR Uu

LTE Uu        IAB-node

↕ NR Uu

UE

UE: NAS with EPC
IAB-node: NAS with EPC

34

EP 4 228 340 B1

# FIG. 9

Relay node 2

Relay node 1

DgNB

UE 3

UE 2

UE 1

→ Backhaul link

⇢ Access link

# FIG. 10

IAB node 1

MT

DU

~Backhaul link A

IAB node 2

MT

DU

~Backhaul link B

IAB node 3

MT

DU

# FIG. 11

Receive CSI-RS configuration information
from second communication device — S1110

Transmit CSI report information
to second communication device,
based on CSI-RS configuration information — S1120

# FIG. 12

transmit CSI-RS configuration information
to second communication device — S1210

receive CSI report information
from second communication device — S1220

transmit signal to second communication device — S1230

# FIG. 13

EP 4 228 340 B1

# FIG. 14

# FIG. 15

1000(102/106, 202/206)

codewords → Scrambler (1010) → Modulator (1020) → Layer Mapper (1030) → layers → Precoder (1040) → Resource Mapper (1050) → Signal Generator (1060) → antenna ports

codewords → Scrambler (1010) → Modulator (1020) → Layer Mapper (1030) → Precoder (1040) → Resource Mapper (1050) → Signal Generator (1060)

41

# FIG. 16

Device (100,200)

| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

EP 4 228 340 B1

# FIG. 17

# FIG. 18

Car or autonomous vehicle
(100)

Communication unit
(110)

Control unit
(120)

Memory unit
(130)

Driving unit
(140a)

Power supply unit
(140b)

Sensor unit
(140c)

Autonomous driving unit
(140d)

108

Device
(100, 200)

Communication unit
(210)

Control unit
(220)

Memory unit
(230)

Driving unit
(140a)

Power supply unit
(140b)

Sensor unit
(140c)

Autonomous driving unit
(140d)

208

FIG. 19

# FIG. 20

EP 4 228 340 B1

# FIG. 21

L3
L2M
L2
L1M
L1

Robot
(100)

Communication unit
(110)

Control unit
(120)

Memory unit
(130)

I/O unit
(140a)

Sensor unit
(140b)

Driving unit
(140c)

EP 4 228 340 B1

# FIG. 22

<u>100</u>

120

| 110 — Communication unit | Control unit | Memory unit — 130 |
| 140a — Input unit | | Output unit — 140b |
| 140c — Learning processor unit | | Sensor unit — 140d |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020093361 A1

- WO 2012177207 A1

**Non-patent literature cited in the description**

- 3rd Generation Partnership Project; Technical Specification Group Radio Access Network; NR. *Radio Resource Control (RRC) protocol specification (Release 16)*, 06 April 2020, vol. RAN WG2 (V16.0.0)